# EUROPEAN PATENT APPLICATION

(11) **EP 4 246 708 A1**
(43) Date of publication of application: **20.09.2023**
(21) Application number: 22876860.2
(22) Date of filing: 28.09.2022
(51) Int. Cl.: H01M 50/593, H01M 50/586, H01M 10/04, H01M 50/538, H01M 50/533, H01M 50/107, H01M 50/167, H01M 50/342, H01M 50/213

(54) **ELECTRODE ASSEMBLY, CYLINDRICAL BATTERY CELL, AND BATTERY PACK AND VEHICLE INCLUDING SAME**

(30) Priority: 30.09.2021 KR 20210130390; 10.12.2021 KR 20210177062; 19.07.2022 KR 20220089232
(71) Applicant: LG Energy Solution, Ltd., Seoul 07335 (KR)
(72) Inventor: JO, Min-Ki, Daejeon 34122 (KR); KANG, Bo-Hyun, Daejeon 34122 (KR); KIM, Do-Gyun, Daejeon 34122 (KR); CHOI, Su-Ji, Daejeon 34122 (KR); HWANGBO, Kwang-Su, Daejeon 34122 (KR)
(74) Representative: Goddar, Heinz J.
(86) International application number: PCT/KR2022/014591
(87) International publication number: WO 2023/055088

(57) **Abstract**

Disclosed are an electrode assembly, a cylindrical battery cell and a battery pack and a vehicle comprising the same. A jellyroll type electrode assembly has a structure in which a first electrode current collector and a second electrode current collector, each having a sheet shape, are wound in a direction with a separator interposed between, wherein the first electrode current collector includes a first uncoated region in which an active material layer is not coated at an end of a long side, the first uncoated region forms a plurality of winding turns with respect to a center of the electrode assembly, is exposed through the separator, and is used as an electrode tab per se, and the electrode assembly comprises an insulation member which covers an exposed curved surface of the first uncoated region disposed at an outermost winding turn exposed through an outer circumferential surface of the electrode assembly among the plurality of winding turns.

## Description

### TECHNICAL FIELD

The present disclosure relates to an electrode assembly, a cylindrical battery cell and a battery pack and a vehicle comprising the same, and more particularly, to an electrode assembly with reduced thickness of an insulation member for increasing the capacity of a battery cell, a cylindrical battery cell and a battery pack and a vehicle comprising the same.

The present application claims priority to Korean Patent Application No. 10-2021-0130390 filed on September 30, 2021 and Korean Patent Application No. 10-2021-0177062 filed on December 10, 2021 and Korean Patent Application No. 10-2022-0089232 filed on July 19, 2022, in the Republic of Korea, the disclosures of which are incorporated herein by reference.

### BACKGROUND ART

Due to their characteristics of being easily applicable to various products and electrical properties such as high energy density, secondary batteries are not only commonly applied to portable devices, but universally applied to electric vehicles (EVs) or hybrid electric vehicle (HEVs) that are driven by an electrical driving source.

Such secondary batteries are gaining attention for their primary advantage of remarkably reducing the use of fossil fuels and not generating by-products from the use of energy, making it a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. This unit secondary battery cell has an operating voltage of about 2.5V to 4.5V.

Accordingly, when a higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack and the electrical connection type may be variously set depending on at least one of the required output voltage or charge/discharge capacity.

Meanwhile, the secondary battery cells include cylindrical, prismatic and pouch-type battery cells. A cylindrical battery cell is fabricated by winding a positive electrode and a negative electrode with an insulator or a separator interposed between to form a jellyroll type electrode assembly, and inserting the jellyroll type electrode assembly in a battery can together with an electrolyte.

Here, when the battery can is connected to the negative electrode or the positive electrode (typically, the negative electrode) and is polar, insulation between the battery can and the jellyroll type electrode assembly is necessary.

Meanwhile, recently, as cylindrical battery cells are used in electric vehicles, the form factor of the cylindrical battery cells increases. That is, the diameter and height of the cylindrical battery cells increase compared to cylindrical battery cells with 18650, 21700 form factors. The increase in form factor leads to the increased energy density, enhanced safety against thermal runaway and improved cooling efficiency.

In addition to the increase in form factor, the cylindrical battery cells may have a further increase in energy density when an unnecessary internal space of the battery can is at the minimum. Accordingly, the components used for electrical insulation between the electrode assembly and the battery can need to be optimally designed to ensure the electrical insulation and increase the capacity of the battery cells.

### DISCLOSURE

### Technical Problem

The present disclosure is conceived and designed in the above-described background, and therefore the present disclosure is directed to providing an electrode assembly with improved insulation structure to reduce the thickness of an insulation member, thereby preventing the insulation member from unnecessarily occupying a space between the side of the electrode assembly and a battery can, a cylindrical battery cell and a battery pack and a vehicle comprising the same.

The present disclosure is further directed to providing an electrode assembly having an increase in size with the reduced thickness of the insulation member, thereby increasing the capacity of a battery cell, a cylindrical battery cell and a battery pack and a vehicle comprising the same.

The present disclosure is further directed to providing an electrode assembly for solving the problem with vibration resistance by the minimized space between the battery can and the electrode assembly, a cylindrical battery cell and a battery pack and a vehicle comprising the same.

The present disclosure is further directed to providing an electrode assembly including an insulation plate on the insulation member to increase the degree of freedom of design and improve the injection molding performance, a cylindrical battery cell and a battery pack and a vehicle comprising the same.

The present disclosure is further directed to providing a battery pack fabricated using cylindrical battery cell having the improved structure and a vehicle comprising the same.

However, the technical problem of the present disclosure to be solved is not limited to the above-described problem, and these and other problems will be clearly understood by those skilled in the art from the following description.

### Technical Solution

To achieve the above technical object, an electrode assembly according to an aspect of the present disclosure there is a jellyroll type electrode assembly having a structure in which a first electrode current collector and a second electrode current collector, each having a sheet shape, are wound in a direction with a separator interposed between, wherein the first electrode current collector includes a first uncoated region in which an active material layer is not coated at an end of a long side, the first uncoated region forms a plurality of winding turns with respect to a center of the electrode assembly, is exposed through the separator, and is used as an electrode tab per se, and the electrode assembly comprises an insulation member which covers an exposed curved surface of the first uncoated region disposed at an outermost winding turn exposed through an outer circumferential surface of the electrode assembly among the plurality of winding turns.

Preferably, the insulation member may be an insulation tape having an adhesive layer on a surface which faces the first uncoated region.

In an aspect, the insulation tape may be a double-sided tape.

In another aspect, the insulation member may be a heat shrink tube which shrinks when exposed to heat.

In another aspect, the insulation member may be wider than a width (a length of a winding axis direction) of the exposed curved surface of the first uncoated region to cover the exposed curved surface.

Preferably, the insulation tape may be 10 *µ*m or more and 50 *µ*m or less in thickness.

In another aspect, the insulation tape may be wrapped around the electrode assembly in at least one layer.

In another aspect, the insulation tape may be made of a material having an ability to prevent thermal deformation when heat is generated from the electrode assembly.

Preferably, the insulation tape may be made of polyimide (PI), polyethylene terephthalate (PET) or polypropylene (PP).

In an aspect, a portion of the insulation tape which covers the exposed curved surface of the first uncoated region may be made of polyimide.

In another aspect, a portion of the insulation tape which covers the exposed curved surface of the first uncoated region may be made of polyimide, and a portion of the insulation tape which covers the separator adjacent to the exposed curved surface may be made of polyethylene terephthalate.

In another aspect, at least part of the first uncoated region may be divided into a plurality of segments along a winding direction of the electrode assembly.

Preferably, the plurality of segments may be bent along a radial direction of the electrode assembly.

Preferably, the plurality of segments may overlap in multilayer along a radial direction of the electrode assembly.

In another aspect, the insulation tape may be attached at least part of the outer circumferential surface of the electrode assembly and at least part of an upper surface of the electrode assembly together.

Preferably, the insulation tape may include a first portion which is attached to the outer circumferential surface of the electrode assembly; and a second portion extended from the first portion, bent from the first portion and attached to the upper surface of the electrode assembly.

In an aspect, the first portion may cover an outermost exposed curved surface of the plurality of bent segments of the first uncoated region and at least part of the separator adjacent to the outermost exposed curved surface.

In another aspect, a part of the first portion which may cover the outermost exposed curved surface area of the plurality of segments of the first uncoated region is equal to or smaller in size than a part of the first portion which covers the separator adjacent to the exposed curved surface area.

In another aspect, the second portion may cover the upper surface area of the plurality of bent segments of the first uncoated region.

Preferably, the first portion may be larger than the second portion.

In another aspect, the second portion may have at least one cutout portion.

In another aspect, a lower end of the cutout portion may be disposed at a higher position than a bent surface of the first uncoated region.

To achieve the above-described technical object, a cylindrical battery cell according to the present disclosure includes a jellyroll type electrode assembly having a structure in which a first electrode current collector and a second electrode current collector, each having a sheet shape, are wound in a direction with a separator interposed between, wherein the first electrode current collector includes a first uncoated region in which an active material layer is not coated at an end of a long side, the first uncoated region forms a plurality of winding turns with respect to a center of the electrode assembly, is exposed through the separator, and is used as an electrode tab per se; a cylindrical battery can accommodating the electrode assembly and electrically connected to the second electrode current collector; a current collector plate electrically connected to the first electrode current collector; a cell terminal connected to the current collector plate; and an insulation member which covers an exposed curved surface of the first uncoated region disposed at an outermost winding turn exposed through an outer circumferential surface of the electrode assembly among the plurality of winding turns.

Preferably, a diameter of the battery can may be larger than a diameter of the electrode assembly and a gap of a preset size is formed between the battery can and the electrode assembly, and the insulation member may be positioned in the gap.

Preferably, the insulation member may be an insulation tape having an adhesive layer on a surface which faces the first uncoated region.

Preferably, at least part of the first uncoated region may be divided into a plurality of segments along a winding direction of the electrode assembly.

Preferably, the plurality of segments may be bent along a radial direction of the electrode assembly.

Preferably, the plurality of segments may overlap in multilayer along a radial direction of the electrode assembly.

In an aspect, the insulation tape may include a first portion which is attached to the outer circumferential surface of the electrode assembly; and a second portion extended from the first portion, bent from the first portion and attached to an upper surface of the current collector plate coupled to the electrode assembly.

Preferably, the first portion covers an outermost exposed curved surface of the plurality of bent segments of the first uncoated region and at least part of the separator adjacent to the outermost exposed curved surface.

Preferably, the second portion may cover the current collector plate coupled to the upper surface area of the plurality of bent segments of the first uncoated region.

Preferably, the insulation tape may be bent from an end of the outermost exposed curved surface of the plurality of bent segments of the first uncoated region and may be coupled to an upper side of the current collector plate.

Preferably, the current collector plate may have a weld region welded with the first uncoated region, and the second portion may be coupled to the upper side of the current collector plate spaced apart from an outer edge of the weld region to avoid interference with the weld region.

In another aspect, the insulation tape may include a first portion which is attached to the outer circumferential surface of the electrode assembly; and a second portion extended from the first portion, bent from the first portion and attached to a bent surface of the plurality of segments of the first uncoated region.

Preferably, the current collector plate may be positioned on the second portion of the insulation tape.

In another aspect, the battery can may have a closed portion and an open portion opposite each other, and the cylindrical battery cell may further include a cap plate configured to close the open portion of the battery can.

Preferably, the cap plate may be separated from the electrode assembly and may be nonpolar.

In another aspect, the closed portion may have a through-hole, and the cell terminal may be coupled to the through-hole.

In another aspect, the cylindrical battery cell may further include an insulation plate between the closed portion and the current collector plate.

Preferably, the insulation plate includes a polymer material having insulating properties.

In another aspect, the insulation plate may be made of an elastic material.

In another aspect, the insulation plate may have a center hole having a preset diameter at a center.

Preferably, the cell terminal may include a terminal insertion portion, and the terminal insertion portion may be inserted into the battery can through the through-hole.

Preferably, the cell terminal may be secured to the through-hole by riveting a lower edge of the terminal insertion portion toward an upper inner surface of the battery can.

Preferably, a diameter of the center hole of the insulation plate may be equal to or larger than a diameter of the terminal insertion portion.

Preferably, the terminal insertion portion of the cell terminal may pass through the center hole of the insulation plate.

Preferably, the terminal insertion portion of the cell terminal may be electrically coupled to the current collector plate through the center hole of the insulation plate.

In another aspect, the cylindrical battery cell according to the present disclosure may include a sealing gasket between an edge of the cap plate and the open portion of the battery can. Additionally, the battery can may include a beading portion by inward beading of the battery can in an area adjacent to the open portion. Additionally, the battery can may include a crimping portion extended and bent to the inner side of the battery can to secure the cap plate together with the sealing gasket around the edge of the cap plate.

Preferably, the crimping portion may be formed at a lower part of the battery can (i.e., opposite the closed portion) on a basis of placement of the battery can.

Preferably, the cap plate may include a vent notch configured to rupture when an internal pressure of the battery can is higher than a threshold.

In an aspect, the vent notch may be formed on two surfaces of the cap plate, and may be formed in at least one of a continuous circular pattern, a discontinuous circular pattern or a linear pattern on the surface of the cap plate.

In another aspect, the vent notch may be formed on a bottom of the battery can on a basis of placement of the battery can, and when the vent notch ruptures, gas in the battery can may be forced out through the bottom of the battery can.

In another aspect, the cylindrical battery cell may further include a lower current collector plate coupled to a bottom of the electrode assembly.

Preferably, the second electrode current collector may include a second uncoated region in which an active material layer is not coated at an end of a long side, the second uncoated region may form a plurality of winding turns with respect to the center of the electrode assembly, may be exposed through the separator, and may be used as an electrode tab per se.

Preferably, the lower current collector plate may be made of a conductive metal and may be electrically connected to the second uncoated region of the second electrode current collector. At least part of the second uncoated region may be divided into a plurality of segments. Additionally, the plurality of segments may be bent and overlap in multilayer along the radial direction of the electrode assembly.

Preferably, at least part of edge of the lower current collector plate may be electrically connected to the beading portion of the battery can. More preferably, at least part of the edge of the lower current collector plate may be electrically connected through the lower surface of the beading portion adjacent to the crimping portion.

Preferably, at least part of the remaining area except the area of the lower current collector plate electrically connected to the beading portion may be coupled to the bent surface of the second uncoated region through welding.

Preferably, the insulation member may have a thickness corresponding to a distance between the current collector plate and an upper inner surface of the battery can.

Preferably, the insulation member may be 100 to 500 *µ*m in thickness.

The technical object of the present disclosure may be also achieved by a battery pack comprising at least one cylindrical battery cell and a vehicle comprising at least one battery pack.

### Advantageous Effects

According to an aspect of the present disclosure, it is possible to reduce the thickness of the insulation member by improving the insulation structure of the electrode assembly, thereby preventing the insulation member from unnecessarily occupying the space between the side of the electrode assembly and the battery can.

According to another aspect of the present disclosure, as the thickness of the insulation member decreases, the size of the electrode assembly increases, thereby increasing the capacity of the battery cell.

According to another aspect of the present disclosure, it is possible to solve the problem caused by vibration by minimizing the space between the battery can and the electrode assembly.

According to another aspect of the present disclosure, when the insulation plate is provided on the insulation member, it is possible to increase the degree of freedom of design and improve the injection molding performance.

According to another aspect of the present disclosure, it is possible to provide a battery pack with improved capacity fabricated using the cylindrical battery cell having the improved structure and a vehicle comprising the same.

### DESCRIPTION OF DRAWINGS

The accompanying drawings illustrate an exemplary embodiment of the present disclosure, and together with the detailed description of the present disclosure described below, serve to provide a further understanding of the technical aspects of the present disclosure, and thus the present disclosure should not be construed as being limited to the drawings.
FIG. 1 is a perspective view of a cylindrical battery cell according to an embodiment of the present disclosure.
FIG. 2 is a cross-sectional perspective view showing a cross section of a core of the cylindrical battery cell in FIG. 1.
FIG. 3 is a cross-sectional view of a cylindrical battery cell according to an embodiment of the present disclosure.
FIG. 4 is a diagram showing a battery can in a cylindrical battery cell according to an embodiment of the present disclosure.
FIG. 5 is a diagram showing an insulation tape attached to the side of an electrode assembly in a cylindrical battery cell according to an embodiment of the present disclosure.
FIG. 6 is a diagram showing a process of bending the insulation tape attached to the side of the electrode assembly in FIG. 5 and attaching it to an upper surface of a current collector, as indicated by an arrow.
FIG. 7 is a diagram showing the insulation tape attached to the side of the electrode assembly and the upper surface of the current collector through the process of FIG. 6.
FIG. 8 is a diagram showing the insulation tape attached to the side of the electrode assembly in the cylindrical battery cell according to another embodiment of FIG. 5.
FIG. 9 is a cross-sectional view of another embodiment of the cylindrical battery cell of FIG. 3.
FIG. 10 is a diagram illustrating a cylindrical secondary battery according to another embodiment of the present disclosure.
FIG. 11 is a diagram showing a current collector plate and a weld region in a cylindrical battery cell according to an embodiment of the present disclosure.
FIG. 12 is a diagram of unfolded view showing the structure of an electrode current collector according to an embodiment of the present disclosure.
FIG. 13 is a diagram showing the definition of width, height and pitch of segments according to FIG. 12.
FIG. 14 is a diagram of unfolded view showing the structure of an electrode current collector according to another embodiment of the present disclosure.
FIG. 15 is a diagram showing the definition of width, height and pitch of segments according to FIG. 14.
FIG. 16 is a cross-sectional view of an electrode assembly according to an embodiment of the present disclosure taken along a Y axis direction (a winding axis direction).
FIG. 17 is a cross-sectional view of an electrode assembly according to another embodiment of the present disclosure taken along a Y axis direction (a winding axis direction).
FIG. 18 is a diagram schematically showing the configuration of a battery pack according to an embodiment of the present disclosure.
FIG. 19 is a diagram illustrating a vehicle comprising the battery pack of FIG. 18.

### BEST MODE

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and illustrations shown in the drawings are just an exemplary embodiment of the present disclosure, but not intended to fully describe the technical aspects of the present disclosure, so it should be understood that a variety of other equivalents and modifications could have been made thereto at the time that the application was filed.

Additionally, to help the understanding of the present disclosure, the accompanying drawings may show some elements in the exaggerated size, not in the actual size. Additionally, like reference numerals may be added to like elements in different embodiments.

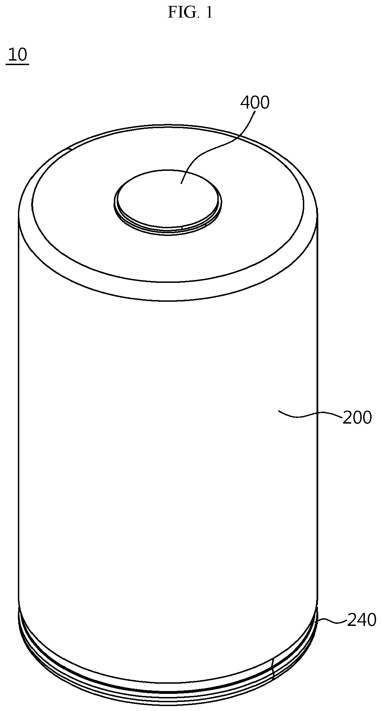

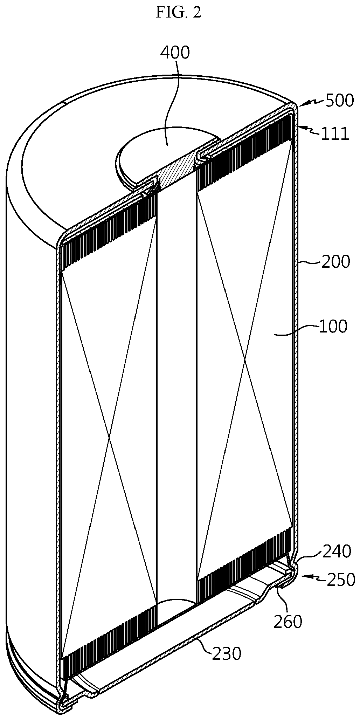

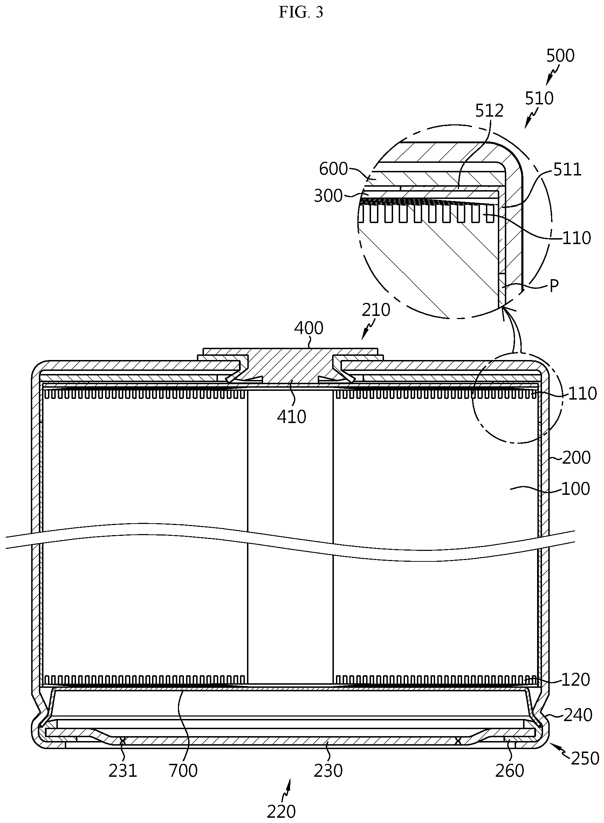

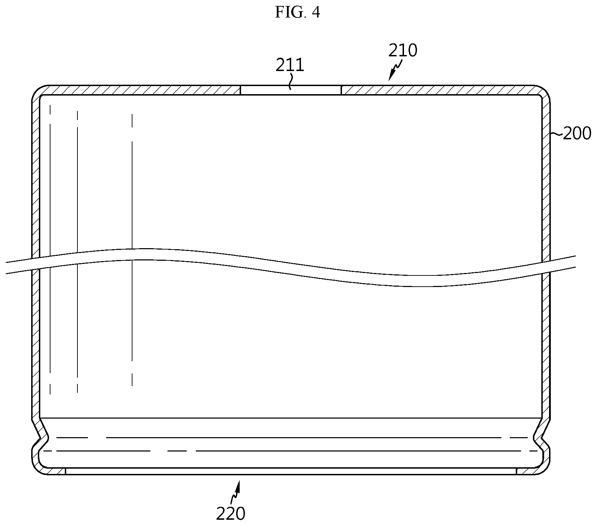

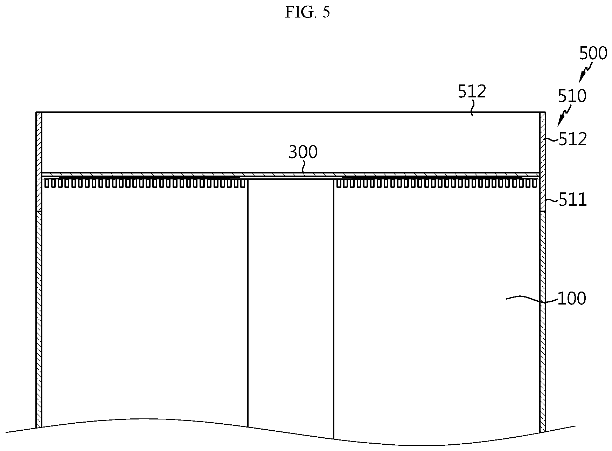

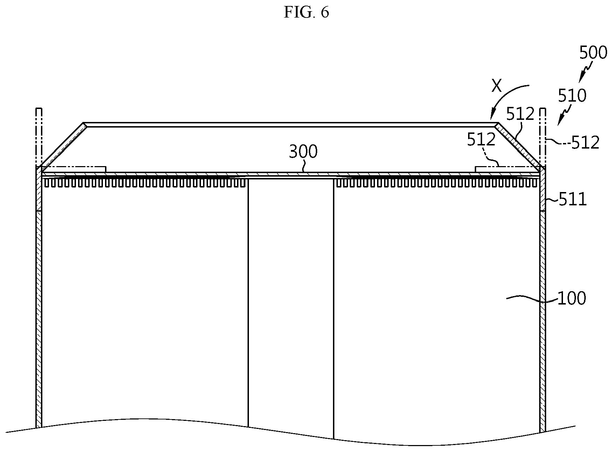

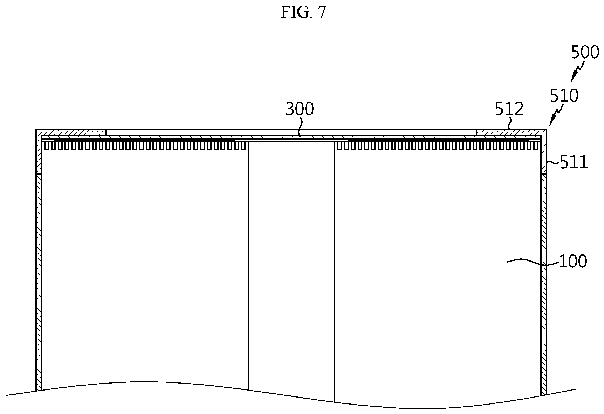

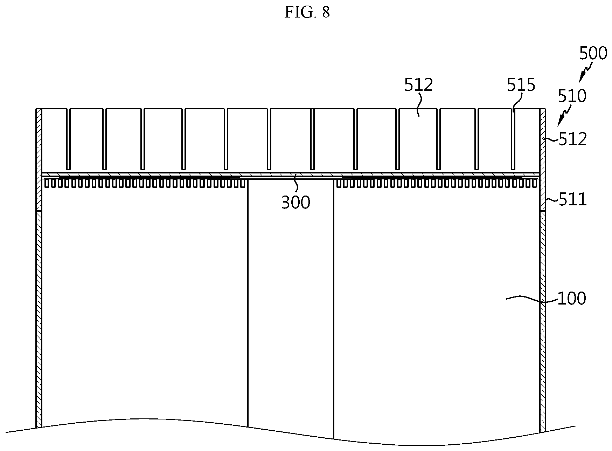

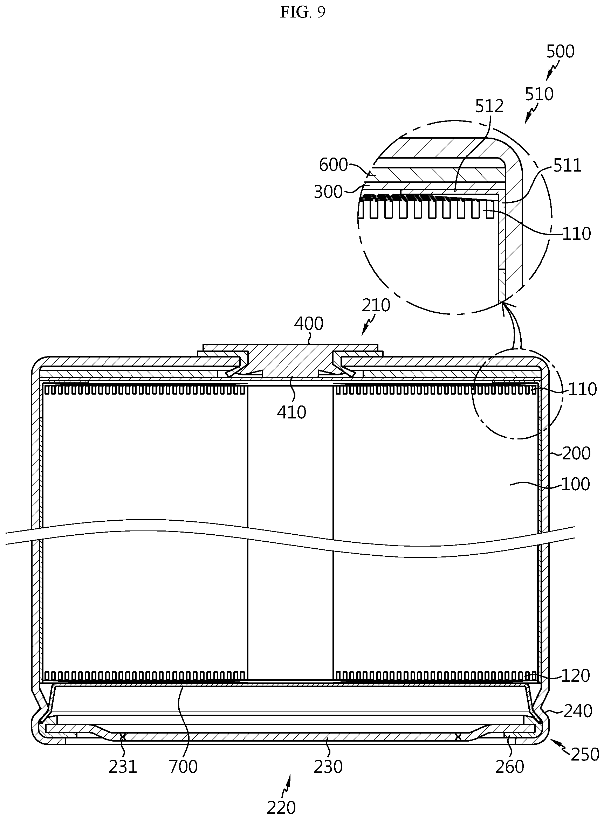

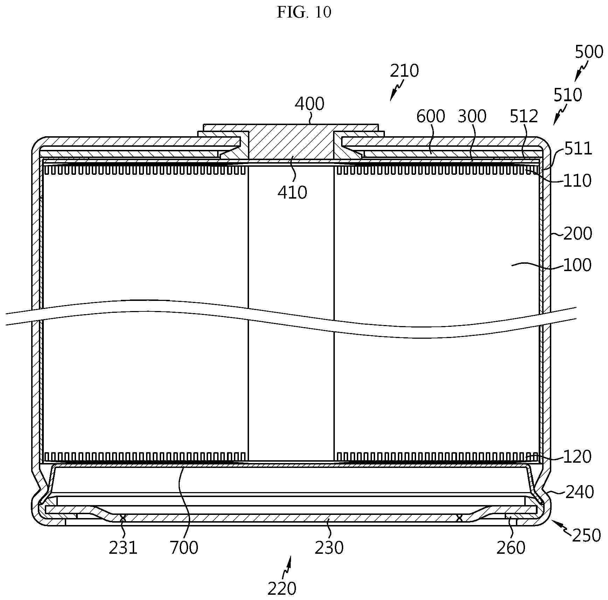

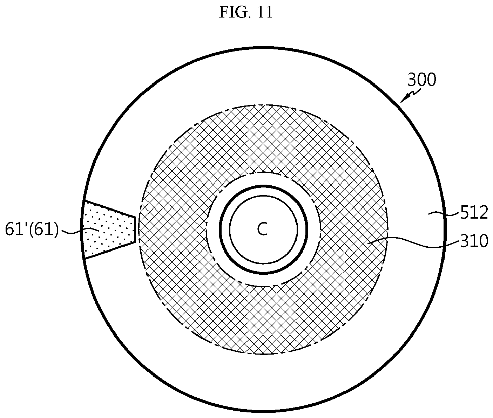

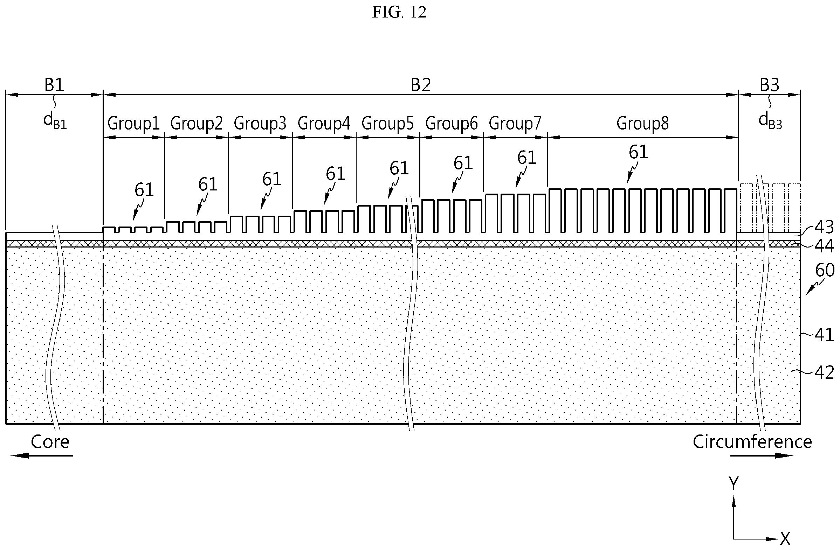

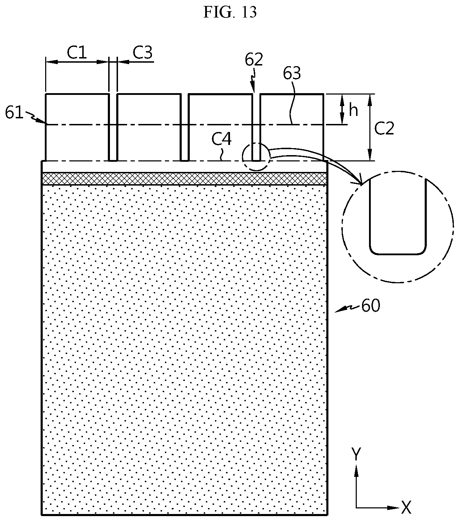

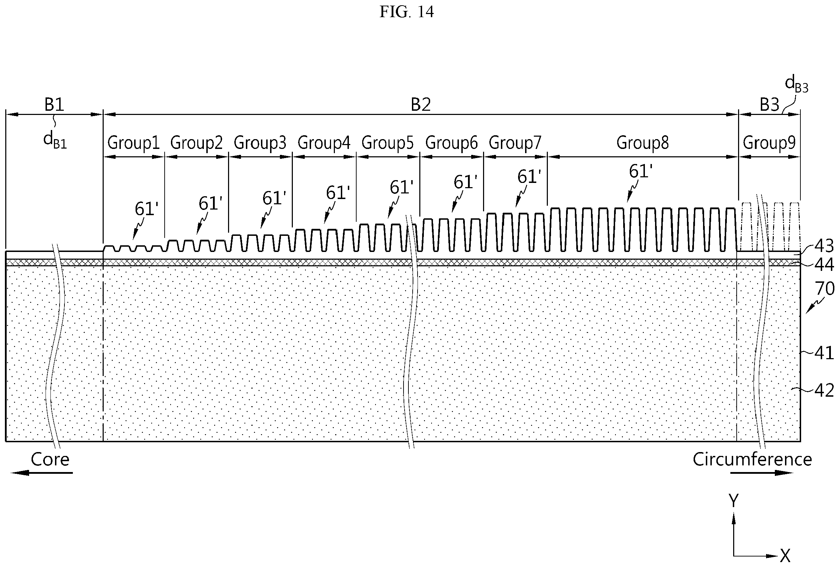

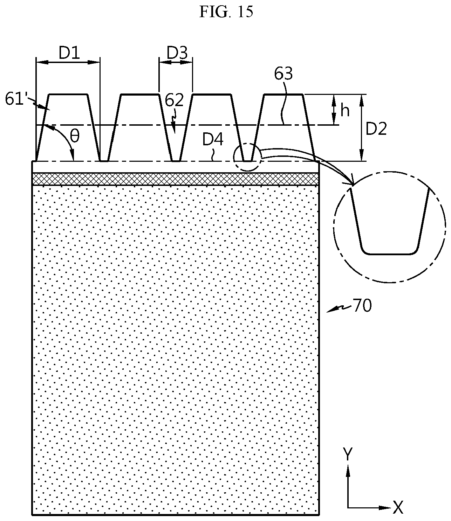

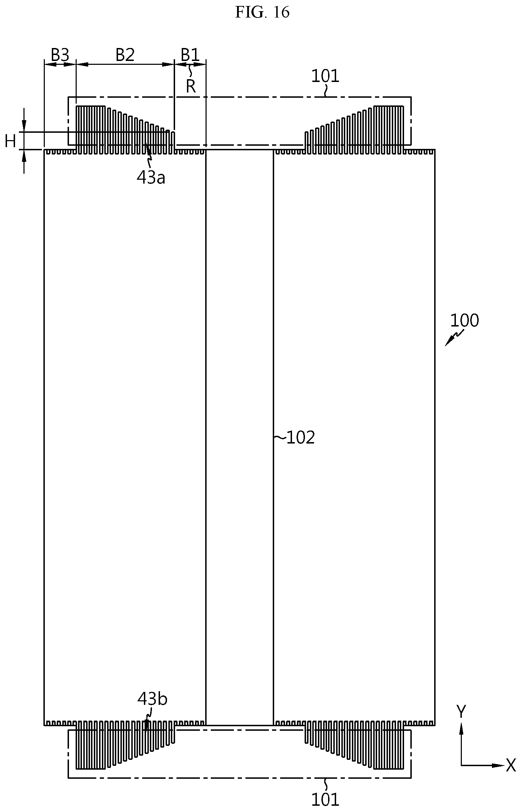

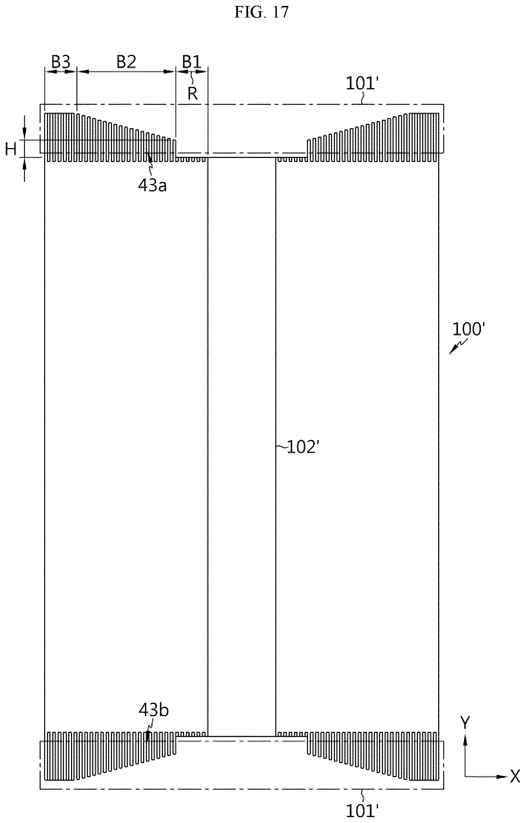

FIG. 1 is a perspective view of a cylindrical battery cell according to an embodiment of the present disclosure, FIG. 2 is a cross-sectional perspective view showing a cross section of a core of the cylindrical battery cell in FIG. 1, FIG. 3 is a cross-sectional view of the cylindrical battery cell according to an embodiment of the present disclosure, FIG. 4 is a diagram showing a battery can in the cylindrical battery cell according to an embodiment of the present disclosure, FIG. 5 is a diagram showing an insulation tape attached to the side of an electrode assembly in the cylindrical battery cell according to an embodiment of the present disclosure, FIG. 6 is a diagram showing a process of bending the insulation tape attached to the side of the electrode assembly in FIG. 5 and attaching it to an upper surface of a current collector, as indicated by the arrow, FIG. 7 is a diagram showing the insulation tape attached to the side of the electrode assembly and the upper surface of the current collector through the process of FIG. 6, FIG. 8 is a diagram showing the insulation tape attached to the side of the electrode assembly in the cylindrical battery cell according to another embodiment of FIG. 5, FIG. 9 is a cross-sectional view of another embodiment of the cylindrical battery cell of FIG. 3, FIG. 10 is a diagram illustrating a cylindrical secondary battery according to another embodiment of the present disclosure, FIG. 11 is a diagram showing a current collector plate and a weld region in the cylindrical battery cell according to an embodiment of the present disclosure, FIG. 12 is a diagram of unfolded view showing the structure of an electrode current collector according to another embodiment of the present disclosure, FIG. 13 is a diagram showing the definition of width, height and pitch of segments according to FIG. 12, FIG. 14 is a diagram of unfolded view showing the structure of an electrode current collector according to another embodiment of the present disclosure, FIG. 15 is a diagram showing the definition of width, height and pitch of segments according to FIG. 14, FIG. 16 is a cross-sectional view of an electrode assembly according to another embodiment of the present disclosure taken along a Y axis direction (a winding axis direction), and FIG. 17 is a cross-sectional view of an electrode assembly according to another embodiment of the present disclosure taken along a Y axis direction (a winding axis direction).

To begin with, the electrode assembly 100 according to an embodiment of the present disclosure will be described. The electrode assembly 100 is a jellyroll type electrode assembly 100 having a structure in which a first electrode current collector and a second electrode current collector, each having a sheet shape are wound in a direction with a separator interposed between.

Referring to FIG. 3, the first electrode current collector includes a first uncoated region 110 in which an active material layer is not coated at the end of the long side. Additionally, the second electrode current collector may include a second uncoated region 120 in which the active material layer is not coated at the end of the long side. That is, at least one of the first electrode current collector or the second electrode current collector may include the uncoated region in which the active material is not coated at the end of the long side of the winding direction.

Here, the first uncoated region 110 forms a plurality of winding turns with respect to the center of the electrode assembly 100, and is exposed through the separator and thus is used as an electrode tab per se.

Preferably, the electrode assembly 100 includes an insulation member 500 that covers an exposed curved surface 111 of the first uncoated region 110 disposed at the outermost winding turn exposed through the outer circumferential surface of the electrode assembly 100 among the plurality of winding turns.

The insulation member 500 may comprise an insulation tape 510 having an adhesive layer on a surface that faces the first uncoated region 110. That is, the insulation tape 510 may be attached to the first uncoated region 110 to electrically insulate the first uncoated region 110.

According to the research of the inventors, for the insulation of the first uncoated region 110, the use of an insulation cap that covers both the top and the side of the electrode assembly 100 may be considered. That is, the insulation cap may simultaneously cover both the side of the electrode assembly 100 and the top of the current collector plate 300.

However, the insulation cap that simultaneously covers the top and the side of the electrode assembly 100 is advantageous in terms of simple assembly, but when fabricating the insulation cap by injection molding, it is difficult to fabricate the insulation cap in a predetermined thickness or less due to the limitation of the injection molding, so the insulation cap occupies large volume in the battery can 200, which puts limitations on size increases of the electrode assembly 100.

In practice, even though the molded product has a small thickness, the thickness is at the level of approximately 0.20 to 0.30mm. Additionally, in case that it is impossible to increase the size of the electrode assembly 100, it is impossible to increase the total capacity of the battery cells. Additionally, the electrode assembly 100 is secured at the area of the insulation cap in the battery can 200, but there is a space between the battery can 200 and the electrode assembly 100 at the area where the insulation cap is absent, causing the problem caused by vibration.

The electrode assembly 100 according to an embodiment of the present disclosure includes the insulation tape 510 instead of the insulation cap to overcome the limitation of the insulation cap. Accordingly, it is possible to increase the size of the electrode assembly 100 by reducing the volume occupied by the insulation member 500 in the battery can 200, and ultimately to increase the capacity of the battery cells. However, despite this description, the use of the insulation cap in the cylindrical battery cell 10 is not precluded.

In an aspect, the insulation tape 510 may be a one-sided tape having an adhesive layer on only one side, or a double-sided tape having an adhesive layer on two sides.

Alternatively, the insulation member 500 may comprise a heat shrink tube that shrinks when exposed to heat. That is, when the electrode assembly 100 is covered with the heat shrink tube, the heat tube comes into close contact with the electrode assembly 100 as it shrinks when exposed to heat. Here, the heat shrink tube may include various types of insulation materials.

The insulation member 500 may be wider than the width of the exposed curved surface 111 to cover the exposed curved surface 111 of the first uncoated region 110. When the first uncoated region 110 is wound, the exposed curved surface 111 is formed at the outermost winding turn, and to cover the first uncoated region 110, the insulation member 500 is wider than the width of the exposed curved surface 111 of the first uncoated region 110.

The insulation member 500 may be wider than the width of the exposed surface to cover the exposed surface of the first uncoated region 110. The first uncoated region 110 forms the exposed curved surface 111 when wound. The insulation member 500 is wider than the width of the exposed curved surface 111 of the first uncoated region 110 to cover the exposed curved surface 111 of the first uncoated region 110. The insulation tape 510 is not limited to a particular thickness, but may have the thickness of 10 *µ*m or more and 50 *µ*m or less. The insulation member 500 may have a thickness corresponding to the distance between the current collector plate 300 and the upper inner surface of the battery can 200, and for example, the thickness may be 100 to 500 *µ*m.

In another aspect, the insulation tape 510 may cover the electrode assembly 100 in a layer to reduce the space occupied by the insulation member 500 between the battery can 200 and the electrode assembly 100, but is not limited thereto, and the insulation tape 510 may cover the electrode assembly 100 in at least one layer to prevent a short circuit.

As the insulation tape 510 is attached to the electrode assembly 100, it is necessary prevent thermal deformation by heat generated from the electrode assembly 100. Accordingly, the insulation tape 510 may be made of various materials having high thermal deformation temperatures to prevent thermal deformation when heat is generated from the electrode assembly 100.

For example, the insulation tape 510 may be made of polyimide (PI), polyethylene terephthalate (PET) or polypropylene (PP). However, the material of the insulation tape 510 is not limited to the above-described materials.

Here, the insulation tape 510 made of polyimide may cover the exposed curved surface 111 of the first uncoated region 110. In this instance, the insulation tape 510 may be attached to the electrode assembly 100 using only polyimide having high thermal deformation temperature.

However, since polyimide has high thermal deformation temperature but is high-priced, the exposed curved surface 111 of the first uncoated region 110 where a large amount of heat is generated may be covered with the insulation tape 510 made of polyimide, and the electrode assembly 100 adjacent to the exposed curved surface 111 of the first uncoated region 110 where a relatively small amount of heat is generated may be covered with the insulation tape 510 made of polyethylene terephthalate that is lower in price than polyimide. For example, in FIG. 3, a first portion 511 and a second portion 512 of the insulation tape 510 may be made of polyimide, and the section P of the insulation tape 510 may be made of polyethylene terephthalate. However, this is just an embodiment, and is not limited thereto.

Meanwhile, at least part of the first uncoated region 110 may be divided into a plurality of segments 61 (see FIG. 12) along the winding direction of the electrode assembly 100. Here, for example, the plurality of segments 61 may be bent toward the core along the radial direction of the electrode assembly 100.

Additionally, the plurality of segments 61 may overlap in multilayer along the radial direction of the electrode assembly 100. For example, the plurality of segments 61 may be formed by laser notching. The segments 61 may be formed by the well-known metal film cutting process, for example, ultrasonic cutting or punching. The structure of the segments 61 will be described below in detail.

Preferably, a predetermined gap is formed between the lower end of the cutting line between the segments 61 and the active material layer to prevent damage to the active material layer when bending the first uncoated region 110. When the first uncoated region 110 is bent, stress concentration occurs near the lower end of the cutting line. Additionally, it is difficult to form a pattern during laser cutting. The gap is preferably 0.2 to 4 mm. When the gap is adjusted to the corresponding numerical range, it is possible to prevent the active material layer near the lower end of the cutting line from being damaged by the stress occurring when bending the first uncoated region 110. Additionally, the gap may prevent damage to the active material layer caused by the clearance in the notching or cutting of the segments 61.

The bent direction of the first uncoated region 110 may be, for example, a direction that faces the winding center of the electrode assembly 100 as described above. When the first uncoated region 110 has the bent shape, the space occupied by the first uncoated region 110 may reduce, leading to improved energy density. Additionally, the increased coupling area between the first uncoated region 110 and the current collector plate 300 may lead to additional improvement in coupling strength and additional reduction in resistance

Although the bend and overlap of the first uncoated region 110 has been described above, the same structure as the first uncoated region 110 may be applied to the second uncoated region 120.

The insulation tape 510 may be attached to the electrode assembly 100 in various fashions. For example, the insulation tape 510 may be attached to at least part of the outer circumferential surface of the electrode assembly 100 and at least part of the upper surface of the electrode assembly 100 together.

Here, in another embodiment, when the current collector plate 300 is coupled to the upper surface of the electrode assembly 100, the insulation tape 510 is attached to at least part of the outer circumferential surface of the electrode assembly 100 and at least part of the upper surface of the current collector plate 300 together. FIG. 3 shows an embodiment in which the current collector plate 300 is coupled to the upper surface of the electrode assembly 100 and the insulation tape 510 is attached to the upper surface of the current collector plate 300, and FIG. 9 shows an embodiment in which the insulation tape 510 is directly attached to the upper surface of the electrode assembly 100.

Referring to FIG. 5, the insulation tape 510 covers the entire outer circumferential surface of the electrode assembly 100, and is extended above the current collector plate 300 higher than the side of the electrode assembly 100. That is, the insulation tape 510 may include the first portion 511 attached to the outer circumferential surface of the electrode assembly 100, and the second portion 512 extended from the first portion 511, bent from the first portion 511 and attached to the upper surface of the current collector plate 300. Alternatively, as shown in FIG. 9, the second portion 512 may be attached to the upper surface of the electrode assembly 100, and the current collector plate 300 may be coupled to the upper surface of the second portion 512.

The first portion 511 and the second portion 512 may be separable from each other, but preferably the first portion 511 and the second portion 512 are integrally formed. However, this description does not limit the scope of protection.

Referring to FIGS. 7 and 9 together, the first portion 511 covers the outermost exposed curved surface 111 of the plurality of bent segments 61 of the first uncoated region 110 and at least part of the separator adjacent to the exposed curved surface 111. Additionally, the second portion 512 is attached to the upper surface of the electrode assembly 100 or the upper surface of the current collector plate 300 to cover the upper surface area of the plurality of bent segments of the first uncoated region 110.

The first portion 511 may be larger than the second portion 512. However, the first portion 511 and the second portion 512 are not limited to the size. In an alternative embodiment, the first portion 511 may cover the entire side of the electrode assembly 100. Accordingly, the insulation tape that covers the section P in FIG. 3 may be also included in the first portion 511.

The size of a portion of the first portion 511 that covers the exposed curved surface 111 of the first uncoated region 110 may be equal to or smaller than the size of a portion of the first portion 511 that covers the separator, but is not limited thereto.

Referring to FIG. 6, the second portion 512 is bent from the first portion 511 along the X direction indicated by the arrow in FIG. 6, and as shown in FIG. 7, the second portion 512 may be attached to the upper surface of the current collector plate 300.

Although FIGS. 5 to 7 show the first portion 511 of the insulation tape 510 covers the entire side of the electrode assembly 100, the present disclosure is not necessarily limited thereto, and the insulation tape 510 may cover parts of the side of the electrode assembly 100.

Meanwhile, in another embodiment, referring to FIG. 8, the second portion 512 of the insulation tape 510 may have at least one cutout portion 515. As described above, when the second portion 512 of the insulation tape 510 has the cutout portion 515, the second portion 512 may be easily bent from the first portion 511. Here, the lower end of the cutout portion 515 may be located at a higher position than the bent surface of the first uncoated region 110.

The electrode assembly 100 according to an embodiment of the present disclosure may be applied to the cylindrical battery cell 10.

Preferably, the cylindrical battery cell 10 may be, for example, a cylindrical battery cell 10 of which a ratio of form factor (a value obtained by dividing the diameter of the cylindrical battery cell by its height, i.e., defined as a ratio of diameter Φ to height H) is larger than approximately 0.4.

Here, the form factor refers to a value indicating the diameter and height of the cylindrical battery cell 10. The cylindrical battery cell 10 according to an embodiment of the present disclosure may be, for example, 46110 cell, 48750 cell, 48110 cell, 48800 cell, 46800 cell. In the value indicating the form factor, the former two numbers indicate the diameter of the cell, the next two numbers indicate the height of the cell, and the last number 0 indicates that the cross section of the cell is circular.

The battery cell according to an embodiment of the present disclosure may be a cylindrical battery cell 10 having an approximately cylindrical shape with the diameter of approximately 46 mm, the height of approximately 110 mm, and the ratio of form factor of 0.418.

The battery cell according to another embodiment may be a cylindrical battery cell 10 having an approximately cylindrical shape with the diameter of approximately 48 mm, the height of approximately 75 mm, and the ratio of form factor of 0.640.

The battery cell according to another embodiment may be a cylindrical battery cell 10 having an approximately cylindrical shape with the diameter of approximately 48 mm, the height of approximately 110 mm, and the ratio of form factor of 0.418.

The battery cell according to another embodiment may be a cylindrical battery cell 10 having an approximately cylindrical shape with the diameter of approximately 48 mm, the height of approximately 80 mm, and the ratio of form factor of 0.600.

The battery cell according to another embodiment may be a cylindrical battery cell 10 having an approximately cylindrical shape with the diameter of approximately 46 mm, the height of approximately 80 mm, and the ratio of form factor of 0.575.

Battery cells having the ratio of form factor of approximately 0.4 or less have been used. That is, for example, 18650 cell and 21700 cell have been used. In the case of 18650 cell, the diameter is approximately 18 mm, the height is approximately 65 mm, and the ratio of form factor is 0.277. In the case of 21700 cell, the diameter is approximately 21 mm, the height is approximately 70 mm, and the ratio of form factor is 0.300.

Referring to FIGS. 2 and 3, the cylindrical battery cell 10 according to an embodiment of the present disclosure includes the electrode assembly 100, the cylindrical battery can 200, the current collector plate 300, a cell terminal 400 and the insulation member 500.

The electrode assembly 100 includes a first electrode current collector and a second electrode current collector, each having a sheet shape, wound in a direction, with a separator interposed between. The first electrode current collector may have a positive or negative polarity, and the second electrode current collector has the opposite polarity to the polarity of the first electrode current collector. That is, the first electrode current collector may be a positive electrode plate or a negative electrode plate, and the second electrode current collector may be a negative electrode plate or a positive electrode plate with the opposite polarity to the polarity of the first electrode current collector. However, for convenience of description, the following description is made based on the first electrode current collector being a positive electrode plate and the second electrode current collector being a negative electrode plate. Meanwhile, the foregoing description replaces a detailed description of the electrode assembly 100.

The insulation member 500 may be coupled to the electrode assembly 100. The insulation member 500 may comprise the insulation tape 510 and may be coupled to the side and the upper surface of the electrode assembly 100, or may be coupled to the side of the electrode assembly 100 and the upper surface of the current collector plate 300.

The first electrode current collector may be coated with a first electrode active material on one or two surfaces. Additionally, the first electrode current collector includes the first uncoated region 110 in which the first electrode active material is not coated at the end thereof.

The second electrode current collector is coated with a second electrode active material on one or two surfaces. Additionally, the second electrode current collector includes the second uncoated region 120 in which the second electrode active material is not coated at the end thereof.

Additionally, the first uncoated region 110 of the first electrode current collector and the second uncoated region 120 of the second electrode current collector are provided in the opposite directions. The first uncoated region 110 is extended toward a closed portion 210 of the battery can 200, and the second uncoated region 120 is extended toward an open portion 220 of the battery can 200.

In the present disclosure, the positive electrode active material coated on the positive electrode plate and the negative electrode active material coated on the negative electrode plate may include, without limitation, any type of active material well-known in the corresponding technical field.

In an example, the positive electrode active material may include an alkali metal compound represented by formula A[AxMy]O2+z (A includes at least one of Li, Na or K; M includes at least one selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; the stoichiometric coefficients x, y and z are selected to keep the compound electrically neutral).

In another example, the positive electrode active material may be an alkali metal compound xLiM¹O₂-(1-x)Li₂M²O₃ (M¹ includes at least one element having an average trivalent oxidation state; M² includes at least one element having an average tetravalent oxidation state; 0≤x≤1) disclosed by US6,677,082 and US6,680,143.

In still another example, the positive electrode active material may be lithium metal phosphate represented by formula LiaM1xFe1-xM2yP1-yM3zO4-z (M1 includes at least one selected from Ti, Si, Mn, Co, Fe, V, Cr, Mo, Ni, Nd, Al, Mg and Al; M2 includes at least one selected from Ti, Si, Mn, Co, Fe, V, Cr, Mo, Ni, Nd, Al, Mg, Al, As, Sb, Si, Ge, V and S; M3 includes a halogen group element optionally including F; 0 < a ≤2, 0 ≤ x ≤ 1, 0 ≤ y < 1, 0 ≤ z < 1; the stoichiometric coefficients a, x, y and z are selected to keep the compound electrically neutral), or Li3M2(PO4)3[M includes at least one selected from Ti, Si, Mn, Fe, Co, V, Cr, Mo, Ni, Al, Mg and Al].

Preferably, the positive electrode active material may include primary particles and/or secondary particles formed by agglomeration of the primary particles.

In an example, the negative electrode active material may include a carbon material, lithium metal or a lithium metal compound, silicon or a silicon compound, tin or a tin compound. Metal oxide having the potential of less than 2V such as TiO₂ and SnO₂ may be used for the negative electrode active material. The carbon material may include low crystalline carbon and high crystalline carbon.

The separator may include a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, used singly or a stack of them. In another example, the separator may include a common porous nonwoven fabric, for example, a nonwoven fabric made of high melting point glass fibers and polyethylene terephthalate fibers.

The separator may have a coating layer of inorganic particles on at least one surface thereof. Additionally, the separator itself may be a coating layer of inorganic particles. The particles that form the coating layer may be bonded to each other with a binder to create interstitial volume between adjacent particles.

The inorganic particles may include inorganic particles having the dielectric constant of 5 or more. Non-limiting examples of the inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO and Y₂O₃.

An electrolyte may be a salt having a structure such as A⁺B⁻⁻. Here, A⁺ includes an alkali metal cation such as Li⁺, Na⁺, K⁺ or a combination thereof. Additionally, B⁻includes at least one anion selected from the group consisting of F⁻, Cl-, Br-, I-, NO₃₋, N(CN)₂₋, BF₄₋, ClO₄₋, AlO₄₋, AlCl₄₋, PF₆₋, SbF₆₋, AsF₆₋, BF₂C₂O₄₋, BC₄O₈₋, (CF₃)₂PF₄₋, (CF₃)₃PF₃⁻, (CF₃)₄PF₂₋, (CF₃)₅PF-, (CF₃)₆P-, CF₃SO₃₋, C₄F₉SO₃₋, CF₃CF₂SO₃₋, (CF₃SO₂)₂N-, (FSO₂)₂N-, CF₃CF₂(CF₃)₂CO-, (CF₃SO₂)₂CH-, (SF₅)₃C-, (CF₃SO₂)₃C-, CF₃(CF₂)₇SO₃₋, CF₃CO₂₋, CH₃CO₂⁻, SCN- and (CF₃CF₂SO₂)₂N-.

The electrolyte may be used by dissolving in an organic solvent. The organic solvent may include at least one of propylene carbonate (PC), ethylenecarbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC) or γ-butyrolactone.

The battery can 200 is so cylindrical that the electrode assembly 100 is accommodated in the battery can 200 and is electrically connected to the second electrode current collector of the electrode assembly 100. Accordingly, the battery can 200 may have the same polarity as the second electrode current collector. That is, when the second electrode current collector has a negative polarity, the battery can 200 also has a negative polarity.

Here, the diameter of the battery can 200 is larger than the diameter of the electrode assembly 100 and there is a gap of a preset size between the battery can 200 and the electrode assembly 100, and as shown in FIG. 3, the insulation member 500 may include the first portion 511 disposed in the gap.

When the size of the battery can 200 is set according to the preset standards, as the size of the electrode assembly 100 increases, the total capacity of the battery cells increases, but the gap between the battery can 200 and the electrode assembly 100 decreases.

That is, the gap between the battery can 200 and the electrode assembly 100 decreases with the increasing size of the electrode assembly 100 to increase the total capacity of the battery cells. To increase the capacity of the battery cells, the insulation member 500 needs to be disposed in the reduced gap between the battery can 200 and the electrode assembly 100, and to this end, the thickness of the insulation member 500 is preferably as small as possible.

Referring to FIG. 4, the battery can 200 may have the closed portion 210 and the open portion 220 opposite each other.

For example, on the basis of FIG. 4, the battery can 200 may have the open portion 220 on bottom. The electrode assembly 100 is accommodated through the open portion 220 on the bottom of the battery can 200, and the electrolyte is injected through the open portion 220 on the bottom of the battery can 200.

That is, the battery can 200 is an approximately cylindrical container having the open portion 220 on the bottom, and is made of, for example, a conductive material such as a metal. The battery can 200 may be made of a conductive metal, for example, aluminum, steel and stainless steel, but is not limited thereto.

Additionally, on the basis of FIG. 4, the battery can 200 may have the closed portion 210 on top. The closed portion 210 may have a through-hole 211, and the cell terminal 400 may be coupled to the through-hole 211 as shown in FIG. 3.

Referring to FIG. 3, an insulation plate 600 may be positioned between the closed portion 210 and the current collector plate 300. For example, the insulation plate 600 may be positioned on the insulation tape 510. Here, when the insulation plate 600 is provided on the insulation member 500, to be specific, the insulation tape 510, it is possible to increase the degree of freedom of design and improve the injection molding performance.

The insulation plate 600 prevents the contact between the first uncoated region 110 and the battery can 200 and the contact between the current collector plate 300 and the battery can 200. That is, the insulation plate 600 is accommodated in the battery can 200, and covers at least part of the electrode assembly 100 to block the electrical connection between the first uncoated region 110 and the battery can 200. Accordingly, the insulation plate 600 may be made of a material having insulation performance. For example, the insulation plate 600 may include an insulating polymer material but is not limited thereto.

The insulation plate 600 may prevent the contact between the first uncoated region 110 and the battery can 200 and the contact between the current collector plate 300 and the battery can 200, together with the insulation tape 510.

The insulation plate 600 may include, for example, an elastic material. Accordingly, when vibration or external impacts are applied to the cylindrical battery cell 10, the insulation plate 600 may absorb the impacts when it is restored to the original state by its elasticity after compressed. Accordingly, it is possible to minimize damage to the internal components of the battery cell when vibration or external impacts are applied to the battery cell.

The insulation plate 600 may have a center hole having a preset diameter at the center. For example, the insulation plate 600 may have an approximately circular center hole adjacent to the winding center. Due to the presence of the center hole, the cell terminal 400 may contact the current collector plate 300 or the first uncoated region 110.

The battery can 200 may include a beading portion 240 and a crimping portion 250 at the lower part. The beading portion 240 is formed by inward beading of the periphery of the outer circumferential surface of the battery can 200 in an area adjacent to the open portion 220 of the battery can 200.

The beading portion 240 may support the electrode assembly 100 to prevent the electrode assembly 100 having a size approximately corresponding to the width of the battery can 200 from slipping out of the open portion 220 formed on the bottom of the battery can 200, and act as a support on which a cap plate 230 is seated. Additionally, the beading portion 240 supports the outer circumferential surface of a sealing gasket 260.

The crimping portion 250 is extended and bent to the inner side of the battery can 200 to secure the cap plate 230 together with the sealing gasket 260 around the edge of the cap plate 230. Here, the crimping portion 250 is formed at the lower part of the battery can 200 on the basis of the placement of the battery can 200. For example, when the battery can 200 is positioned such that the cell terminal 400 is disposed at the upper part as shown in FIG. 3, the crimping portion 250 is formed at the lower part of the battery can 200 on the basis of FIG. 3. Additionally, as shown in FIG. 3 the crimping portion 250 is formed below the beading portion 240.

However, the present disclosure does not preclude the battery can 200 that does not include at least one of the beading portion 240 or the crimping portion 250. In the present disclosure, when the battery can 200 does not include at least one of the beading portion 240 or the crimping portion 250, the securing of the electrode assembly 100, the securing of the cap plate 230 or the sealing of the battery can 200 may be accomplished through at least one of additional application of a component that acts as a stopper for the electrode assembly 100, additional application of a structure on which the cap plate 230 is seated, or welding between the battery can 200 and the cap plate 230.

On the basis of FIG. 3, the crimping portion 250 is formed below the beading portion 240. The crimping portion 250 is extended and bent around the edge of the cap plate 230 disposed below the beading portion 240. By the bent shape of the crimping portion 250, the cap plate 230 is secured above the beading portion 240. The crimping portion 250 may be omitted and any other securing structure may be used to secure the cap plate 230 that covers the open portion of the battery can 200. For example, the applicant's patent publication KR 10-2019-0030016 A discloses a cylindrical battery cell in which the beading portion is omitted, and this structure may be employed in the present disclosure.

The current collector plate 300 is electrically connected to the first electrode current collector on the electrode assembly 100. The current collector plate 300 is made of a conductive metal and is connected to the first uncoated region 110 of the electrode assembly 100.

The current collector plate 300 is coupled onto a coupling surface formed by bending the end of the first uncoated region 110 in a direction parallel to the current collector plate 300. The bent direction of the first uncoated region 110 may be, for example, a direction toward the winding center of the electrode assembly 100.

When the first uncoated region 110 has the bent shape as described above, the space occupied by the first uncoated region 110 reduces, leading to improved energy density. Additionally, the increased coupling area between the first uncoated region 110 and the current collector plate 300 may lead to the improved coupling strength and the reduced resistance.

The cell terminal 400 is made of a conductive metal, and is coupled to the through-hole 211 formed in the closed portion 210 of the battery can 200 and electrically connected to the current collector plate 300. Additionally, the cell terminal 400 is electrically connected to the first electrode current collector of the electrode assembly 100 through the current collector plate 300 and accordingly has a positive polarity. That is, the cell terminal 400 may act as a first electrode terminal or a positive electrode terminal. Additionally, the battery can 200 is electrically connected to the second electrode current collector of the electrode assembly 100 as described above and accordingly has a negative polarity.

The cell terminal 400 may include a terminal insertion portion 410. The terminal insertion portion 410 may be inserted into the battery can 200 through the through-hole 211 formed in the closed portion 210 of the battery can 200, such that the lower end is electrically connected to the first uncoated region 110.

The terminal insertion portion 410 may be coupled to the current collector plate 300 or the first uncoated region 110 through both the battery can 200 and the insulation plate 600. The terminal insertion portion 410 may be secured to the through-hole by riveting toward the upper inner surface of the battery can 200 with the lower edge pressed by a caulking jig.

That is, the lower peripheral end of the terminal insertion portion 410 may be curved toward the inner surface of the battery can 200 by the application of the caulking jig. To this end, the maximum width of the end of the terminal insertion portion 410 may be larger than the maximum width of the hole of the battery can 200 formed by the passing-through of the terminal insertion portion 410.

Meanwhile, in another embodiment, the terminal insertion portion 410 may not be curved toward the inner surface of the battery can 200. For example, referring to FIG. 10, the terminal insertion portion 410 may have an approximately cylindrical shape passing through the hole at approximately the center of the upper surface of the battery can 200.

In an embodiment of the present disclosure, the terminal insertion portion 410 may have a circular shape on plane, but is not limited thereto. The terminal insertion portion 410 may selectively have a polygonal shape, a star-like shape and a shape having legs extended from the center.

The terminal insertion portion 410 of the cell terminal 400 may pass through the center hole of the insulation plate 600. Additionally, the diameter of the center hole of the insulation plate 600 may be equal to or larger than the diameter of the terminal insertion portion 410. Additionally, the terminal insertion portion 410 of the cell terminal 400 may be electrically coupled to the current collector plate 300 through the center hole of the insulation plate 600.

The insulation member 500 is interposed between the battery can 200 and the electrode assembly 100. In relation to the detailed description of the insulation member 500, the foregoing description replaces the overlapping description with the description of the insulation member 500 in the electrode assembly 100 according to an embodiment of the present disclosure and the following is the description not yet made.

Each embodiment for each position of the current collector plate 300 in the cylindrical battery cell 10 according to an embodiment of the present disclosure will be described.

To begin with, as shown in FIG. 3, the current collector plate 300 coupled to the upper surface area of the plurality of bent segments 61 of the first uncoated region 110 will be described. In this case, the second portion 512 of the insulation tape 510 covers the upper surface of the current collector plate 300, not the first uncoated region 110.

That is, when the insulation tape 510 includes the first portion 511 and the second portion 512, the first portion 511 of the insulation tape 510 covers the side of the electrode assembly 100, for example, the outermost exposed curved surface 111 area of the plurality of bent segments of the first uncoated region 110 and at least part of the separator adjacent to it. Additionally, the second portion 512 is coupled to the upper surface of the current collector plate 300 coupled to the upper surface area of the plurality of bent segments 61 of the first uncoated region 110 to cover the edge area of the current collector plate 300. Accordingly, the insulation tape 510 may electrically insulate the first uncoated region 110 and the current collector plate 300 from the battery can 200. The foregoing description replaces the structure in which the second portion 512 is extended from the first portion 511.

Preferably, the insulation tape 510 may be bent from the outermost exposed curved surface 111 of the plurality of bent segments 61 of the first uncoated region 110 and coupled to the upper surface of the current collector plate 300.

The current collector plate 300 may be coupled to the bent surface of the segments 61 of the first uncoated region 110 by different types of welding. Referring to FIG. 11, the current collector plate 300 has a weld region 310 for welding with the segments 61 of the first uncoated region 110, and the second portion 512 of the insulation tape 510 may be coupled to the upper side of the current collector plate 300 in contact with or spaced apart from the outer edge of the weld region 310 to avoid interference with the weld region 310.

Meanwhile, in another embodiment, referring to FIG. 9, the second portion 512 of the insulation tape 510 coupled to the upper surface area of the plurality of bent segments 61 of the first uncoated region 110 and the current collector plate 300 coupled to the upper side of the second portion 512 of the insulation tape 510 will be described.

The second portion 512 is extended from the first portion 511, bent from the first portion 511 and attached to the bent surface of the plurality of segments 61 of the first uncoated region 110. Additionally, the current collector plate 300 is positioned on the second portion 512 of the insulation tape 510. The insulation plate 600 may be interposed between the current collector plate 300 and the battery can 200 to insulate the current collector plate 300 from the battery can 200.

The cap plate 230 is configured to close the open portion 220 of the battery can 200. The cap plate 230 may be made of, for example, a metal to ensure stiffness.

The cap plate 230 closes the open portion 220 on the bottom of the battery can 200. The cap plate 230 may be separated from the electrode assembly 100 and may be nonpolar. That is, even in case that the cap plate 230 is made of a conductive metal, the cap plate 230 may be nonpolar. The nonpolar cap plate 230 represents that the cap plate 230 is electrically insulated from the battery can 200 and the cell terminal 400. The cap plate 230 may be polar or nonpolar, and its material is not necessarily limited to the conductive metal.

The cap plate 230 may be seated and supported on the beading portion 240 of the battery can 200. Additionally, the cap plate 230 is secured by the crimping portion 250. The sealing gasket 260 may be interposed between the cap plate 230 and the crimping portion 250 of the battery can 200 to ensure sealabity of the battery can 200. That is, the sealing gasket 260 may be interposed between the edge of the cap plate 230 and the open portion 220 of the battery can 200.

Meanwhile, the battery can 200 of the present disclosure may not include at least one of the beading portion 240 or the crimping portion 250, and in this case, the sealing gasket 260 may be interposed between the securing structure provided at the open portion 220 of the battery can 200 and the cap plate 230 to ensure sealability of the battery can 200.

The cap plate 230 may include a vent notch 231 designed to rupture when the internal pressure of the battery can 200 is higher than the threshold.

For example, the vent notch 231 may be formed on two surfaces of the cap plate 230, and may be formed in at least one of a continuous circular pattern, a discontinuous circular pattern or a linear pattern on the surface of the cap plate 230. Additionally, the vent notch 231 may be formed in a variety of different patterns.

The vent notch 231 may be formed on the bottom of the battery can 200 on the basis of the placement of the battery can 200, and when the vent notch 231 ruptures, gas in the battery can 200 may be forced out through the bottom of the battery can 200.

For example, when the battery can 200 is positioned such that the cell terminal 400 is disposed at the upper part as shown in FIG. 3, the vent notch 231 may be formed on the bottom of the battery can 200 on the basis of FIG. 3.

The vent notch 231 may be an area having a smaller thickness than any other area of the cap plate 230.

Since the vent notch 231 is thinner than the surrounding area, the vent notch 231 may be more prone to rupture than the surrounding area, and when the internal pressure of the battery can 200 is equal to or higher than the predetermined level, the vent notch 231 may rupture to force out gas inside of the battery can 200.

For example, the vent notch 231 may be formed by partially reducing the thickness of the battery can 200 through notching on one or two surfaces of the cap plate 230.

The cylindrical battery cell 10 according to an embodiment of the present disclosure may have a structure in which positive and negative electrode terminals are arranged at the upper part, resulting in the more complex upper structure than the lower structure.

Accordingly, to smoothly force out gas inside of the battery can 200, the cap plate 230 that forms the lower surface of the cylindrical battery cell 10 may have the vent notch 231.

As described above, when gas inside of the battery can 200 provided in the cylindrical battery cell 10 is forced out downwards, it may be good for the user's safety. For example, in case that the cylindrical battery cell 10 is positioned immediately below the driver's seat in an electric vehicle, when gas is forced out upwards, there may be safety accident risks of the driver.

However, when gas is forced out through the bottom of the battery can 200 as in the cylindrical battery cell 10 according to an embodiment of the present disclosure, the above-described problem does not occur in case that the cylindrical battery cell 10 is positioned immediately below the driver's seat in an electric vehicle.

Referring to FIG. 3, the lower end of the cap plate 230 is preferably disposed higher than the lower end of the battery can 200. In this case, even when the lower end of the battery can 200 contacts the ground or the bottom of a housing for forming a module or a pack, the cap plate 230 does not contact the ground or the bottom of the housing for forming a module or a pack.

Accordingly, it is possible to prevent a phenomenon in which the pressure required for the rupture of the vent notch 231 is different from the design pressure due to the weight of the cylindrical battery cell 10, thereby allowing for smooth rupture of the vent notch 231.

Referring to FIG. 3, the lower current collector plate 700 is coupled to the bottom of the electrode assembly 100. The lower current collector plate 700 is made of a conductive metal, for example, aluminum, steel, copper and nickel and is electrically connected to the second uncoated region 120 of the second electrode current collector.

Preferably, the lower current collector plate 700 is electrically connected to the battery can 200. To this end, at least part of the edge area of the lower current collector plate 700 may be interposed and secured between the inner surface of the battery can 200 and the sealing gasket 260.

In an embodiment, at least part of the edge area of the lower current collector plate 700 may be secured to the beading portion 240 by welding while being supported on the lower end surface of the beading portion 240 formed at the lower end of the battery can 200. In a variation, at least part of the edge area of the lower current collector plate 700 may be directly welded to the inner wall surface of the battery can 200.

Preferably, at least part of the remaining area except the coupling area of the lower current collector plate 700 with the beading portion may be coupled to the bent surface of the second uncoated region 120 through welding, for example, laser welding.

For example, at least part of the edge of the lower current collector plate 700 may be electrically coupled to the surface adjacent to the crimping portion 250 among the upper surface and the lower surface of the beading portion 240.

Meanwhile, the electrode assembly 100 according to an embodiment of the present disclosure may include the first electrode current collector and the second electrode current collector, the first electrode current collector may include the first uncoated region, and the second electrode current collector may include the second uncoated region. Additionally, at least part of the first uncoated region and/or the second uncoated region may be divided into the plurality of segments, and the structure of the segments will be described below in detail.

Referring to FIG. 12, in the uncoated region 43 of the electrode plate 60, the height of a core-side uncoated region B1 and an outer circumference-side uncoated region B3 is 0 or more, and is smaller than an intermediate uncoated region B2. Additionally, the height of the core-side uncoated region B1 and the height of the outer circumference-side uncoated region B3 may be equal or different.

Preferably, at least part of the intermediate uncoated region B2 may include the plurality of segments 61. The plurality of segments 61 may have a stepwise increase in height as it goes from the core to the outer circumference.

The segments 61 may be formed by laser notching. The segments 61 may be formed by the well-known metal film cutting process, for example, ultrasonic cutting or punching.

In FIG. 12, a predetermined gap is preferably formed between the lower end (C4 in FIG. 13) of the cutting line between the segments 61 and the active material layer 42 to prevent damage to the active material layer 42 and/or the insulation coating layer 44 when bending the uncoated region 43. It is because when the uncoated region 43 is bent, stress concentration occurs near the lower end of the cutting line. The gap is preferably 0.2 to 4 mm. When the gap is adjusted to the corresponding numerical range, it is possible to prevent the active material layer 42 and/or the insulation coating layer 44 near the lower end of the cutting line from being damaged by the stress occurring when bending the uncoated region 43. Additionally, the gap may prevent damage to the active material layer 42 and/or the insulation coating layer 44 caused by the clearance in the notching or cutting of the segments 61. Preferably, when the electrode plate 60 is wound, at least part of the insulation coating layer 44 may be exposed through the separator. In this case, the insulation coating layer 44 may support the bending point when the segments 61 is bent.

The plurality of segments 61 may form a plurality of segment groups as it goes from the core to the outer circumference. At least one of the width, height or pitch of the segments in the same segment group may be substantially equal.

FIG. 13 is a diagram showing the definition of the width, height and pitch of the segments 61 according to an embodiment of the present disclosure.

Referring to FIG. 13, the width C1, height C2 and pitch C3 of the segments 61 are designed to prevent the tear of the uncoated region 43 when bending the uncoated region 43, and sufficiently increase the number of overlapping layers of the uncoated region 43 to improve the weld strength without abnormal deformation of the uncoated region 43. The abnormal deformation refers to irregular deformation occurring when the uncoated region below the bending point does not keep it linear any longer and is collapsing.

Preferably, the width C1 of the segments 61 may be adjusted in the range of 1 to 6 mm. When C1 is less than 1 mm, there is a non-overlapping area or an empty space (a gap) sufficient to ensure the weld strength when the segments 61 are bent toward the core. In contrast, when C1 is larger than 6 mm, there is a likelihood that the uncoated region 43 near the bending point may tear by the stress when the segments 61 are bent.

Additionally, the height of the segments 61 may be adjusted in the range of 2 to 10 mm. When C2 is less than 2 mm, there is a non-overlapping area or an empty space (a gap) sufficient to ensure the weld strength when the segments 61 are bent toward the core. In contrast, when C2 is larger than 10 mm, it is difficult to fabricate the electrode current collector while uniformly maintaining the flatness of the uncoated region in the winding direction X. That is, the height of the uncoated region increases, causing a swell. Additionally, the pitch C3 of the segments 61 may be adjusted in the range of 0.05 to 1 mm. When C3 is less than 0.05 mm, the uncoated region 43 near the bending point may tear by the stress when the segments 61 are bent. In contrast, when C3 is larger than 1 mm, there is a non-overlapping area or an empty space (a gap) sufficient to ensure the weld strength when the segments 61 are bent.

Referring to FIG. 13, the cutout portion 62 is positioned between two adjacent segments 61 in the winding direction X. The cutout portion 62 corresponds to a space formed by removing the uncoated region 43. Preferably, the lower corner of the cutout portion 62 may have a round shape (see the partially enlarged diagram). The round shape may reduce the stress applied to the lower end of the cutout portion 62 when winding the electrode plate 60 and/or bending the segments 61.

Referring back to FIG. 12, the width d_{B1} of the core-side uncoated region B 1 is designed to meet the requirement that it is required not to cover the hollow of the electrode assembly core when bending the segments 61 of the intermediate uncoated region B2 toward the core.

In an example, the width d_{B1} of the core-side uncoated region B 1 may increase in proportion to the bend length of the segments 61 of Group 1. The bend length corresponds to the height of the segments 61 with respect to the bending point (63 in FIG. 13). Referring to FIG. 13, C4 denotes the lowest bendable point. The bending point may be appropriately set to a location indicated by C4 or higher than C4. The bend length is a length from the bending point to the top of the segments 61. Specifically, the bending point may be set to a predetermined point of the height C2 of the segments 61 with respect to C4. The predetermined point may be set to prevent mechanical damage to the active material layer 42 or the insulation coating layer 44 caused by the stress occurring when bending the segments 61, and ensure a sufficient number of overlapping layers in the radial direction when the segments 61 are bent in the radial direction of the electrode assembly, thereby ensuring sufficient weld strength when welding the current collector plate to the bent area of the segments 61.

In a specific example, when the electrode plate 60 is used to fabricate the electrode assembly of the cylindrical cell with 46800 form factor, the width d_{B1} of the core-side uncoated region B1 may be set to 180 to 350 mm according to the diameter of the electrode assembly core.

In an embodiment, the width of each segment group may be designed to form the same winding turn of the electrode assembly.

Here, the winding turn may be counted based on the end of the core-side uncoated region B 1 when the electrode plate 60 is wound.

In another variation, the width of each segment group may be designed to form at least one winding turn of the electrode assembly.

In still another variation, the width and/or height and/or pitch of the segments 61 in the same segment group may gradually and/or stepwise and/or irregularly increase or decrease in the group.

Groups 1 to 8 are just an example of the segment group. The number of groups, the number of segments 61 in each group and the width of the group may be preferably adjusted so that the segments 61 overlap in multilayer to disperse the stress to the maximum and ensure sufficient weld strength in the bending process of the uncoated region 43.

In another variation, the height of the outer circumference-side uncoated region B3 may decrease gradually or stepwise.

In still another variation, the segmented structure of the intermediate uncoated region B2 may be extended to the outer circumference-side uncoated region B3 (see the dashed line). In this case, in the same way as the intermediate uncoated region B2, the outer circumference-side uncoated region B3 may include the plurality of segments. In this case, the width and/or height and/or pitch of the segments of the outer circumference-side uncoated region B3 may be larger than that of the segments of the intermediate uncoated region B2. Optionally, the segmented structure of the outer circumference-side uncoated region B3 may be the same as the outermost segment group of the intermediate uncoated region B2.

In a specific embodiment, when the electrode plate 60 is used to fabricate the electrode assembly of the cylindrical cell with 46800 form factor, the width d_{B1} of the core-side uncoated region B1 may be 180 to 350 mm. The width of Group 1 may be 35 to 40% of the width of the core-side uncoated region B1. The width of Group 2 may be 130 to 150% of the width of Group 1. The width of Group 3 may be 120 to 135% of the width of Group 2. The width of Group 4 may be 85 to 90% of the width of Group 3. The width of Group 5 may be 120 to 130% of the width of Group 4. The width of Group 6 may be 100 to 120% of the width of Group 5. The width of Group 7 may be 90 to 120% of the width of Group 6. The width of Group 8 may be 115 to 130% of the width of Group 7. In the same way as the width of the core-side uncoated region B1, the width d_{B3} of the outer circumference-side uncoated region B3 may be 180 to 350 mm.

The width of Groups 1 to 8 does not show a uniformly increasing or decreasing pattern because the width of the segments gradually increases as it goes from Group 1 to Group 8 but the number of segments in the group is limited to an integer. Accordingly, the number of segments in the specific segment group may decrease. Accordingly, as shown, the width of the group may show an irregular change as it goes from the core to the outer circumference.

That is, when the winding direction width of three segment groups that are consecutively adjacent in the circumferential direction of the electrode assembly is W1, W2 and W3, respectively, a combination of segment groups having W3/W2 that is smaller than W2/W1 may be included.

In the specific example, it is the same case with Groups 4 to 6. A width ratio of Group 5 to Group 4 is 120 to 130%, and a width ratio of Group 6 to Group 5 is 100 to 120% and its value is smaller than 120 to 130%.

Referring to FIG. 14, the electrode plate 70 is substantially the same as FIG. 12 except the shape of the segments 61' is changed from the rectangular shape to the trapezoidal shape.

FIG. 15 shows the definition of the width, height and pitch of the trapezoidal segments 61'.

Referring to FIG. 15, the width D1, height D2 and pitch D3 of the segments 61' are designed to prevent the tear of the uncoated region 43 near the bending point when bending the uncoated region 43 and sufficiently increase the number of overlapping layers of the uncoated region 43 to ensure sufficient weld strength without abnormal deformation of the uncoated region 43.

Preferably, the width D1 of the segments 61' may be adjusted in the range of 1 to 6 mm. When D1 is less than 1 mm, there is a non-overlapping area or an empty space (a gap) sufficient to ensure the weld strength when the segments 61' are bent toward the core. In contrast, when D1 is larger than 6 mm, there is a likelihood that the uncoated region 43 near the bending point may tear by the stress when the segments 61 are bent. Additionally, the height of the segments 61' may be adjusted in the range of 2 to 10 mm. When D2 is less than 2 mm, there is a non-overlapping area or an empty space (a gap) sufficient to ensure the weld strength when the segments 61' are bent toward the core. In contrast, when D2 is larger than 10 mm, it is difficult to fabricate the electrode current collector while uniformly maintaining the flatness of the uncoated region 43 in the winding direction. Additionally, the pitch D3 of the segments 61' may be adjusted in the range of 0.05 to 1 mm. When D3 is less than 0.05 mm, the uncoated region 43 near the bending point D4 may tear by the stress when the segments 61' are bent. In contrast, when D3 is larger than 1 mm, there is a non-overlapping area or an empty space (a gap) sufficient to ensure the weld strength when the segments 61' are bent.

The cutout portion 62 is positioned between two adjacent segments 61' in the winding direction X. The cutout portion 62 corresponds to a space formed by removing the uncoated region 43. Preferably, the lower corner of the cutout portion 62 may have a round shape (see partially enlarged section). The round shape may reduce the stress when the segments 61' are bent.

Referring to FIGS. 14 and 15, the plurality of segments 61' may increase in the interior bottom angle θ of the trapezoid as it goes from the core to the outer circumference. When the radius of the electrode assembly 70 increases, the curvature increases. When the interior bottom angle θ of the segments 61' increases with the increasing radius of the electrode assembly, it is possible to reduce the stress occurring in the radial direction and circumferential direction when the segments 61' are bent. Additionally, with the increasing interior bottom angle θ, the overlap area with the inner segments 61' and the number of overlapping layers increase when the segments 61' are bent, thereby uniformly ensuring the weld strength in the radial direction and circumferential direction and forming the bent surface flatly.

In an example, in case that the electrode plate 70 is used to fabricate the electrode assembly of the cylindrical cell with 46800 form factor, when the radius of the electrode assembly 70 increases from 4 mm to 22 mm, the interior angle of the segments 61' may increase stepwise in the range of 60° to 85°.

In a variation, in the same way as the first embodiment and the second embodiment, the height of the outer circumference-side uncoated region B3 may decrease gradually or stepwise. Additionally, the segmented structure of the intermediate uncoated region B2 may be extended to the outer circumference-side uncoated region B3 (see the dashed line). In this case, in the same way as the intermediate uncoated region B2, the outer circumference-side uncoated region B3 may include the plurality of segments. In this case, the width and/or height and/or pitch of the segments of the outer circumference-side uncoated region B3 may be larger than that of the segments of the intermediate uncoated region B2. Optionally, the segmented structure of the outer circumference-side uncoated region B3 may be substantially the same as the outermost segment group of the intermediate uncoated region B2.

In a specific embodiment, when the electrode plate 70 is used to fabricate the electrode assembly of the cylindrical cell with 46800 form factor, the width d_{B1} of the core-side uncoated region B1 may be 180 to 350 mm. The width of Group 1 may be 35 to 40% of the width of the core-side uncoated region B1. The width of Group 2 may be 130 to 150% of the width of Group 1. The width of Group 3 may be 120 to 135% of the width of Group 2. The width of Group 4 may be 85 to 90% of the width of Group 3. The width of Group 5 may be 120 to 130% of the width of Group 4. The width of Group 6 may be 100 to 120% of the width of Group 5. The width of Group 7 may be 90 to 120% of the width of Group 6. The width of Group 8 may be 115 to 130% of the width of Group 7. In the same way as the width of the core-side uncoated region B1, the width d_{B3} of the outer circumference-side uncoated region B3 may be 180 to 350 mm. The width of Groups 1 to 8 does not show a uniformly increasing or decreasing pattern because the width of the segments gradually increases as it goes from Group 1 to Group 8 but the number of segments in the group is limited to an integer. Accordingly, the number of segments in the specific segment group may decrease. Accordingly, as shown, the width of the group may show an irregular change as it goes from the core to the outer circumference.

That is, when the winding direction width of three segment groups that are consecutively adjacent in the circumferential direction of the electrode assembly is W1, W2 and W3, respectively, a combination of segment groups having W3/W2 that is smaller than W2/W1 may be included.

In the specific example, it is the same case with Groups 4 to 6. A width ratio of Group 5 to Group 4 is 120 to 130%, and a width ratio of Group 6 to Group 5 is 100 to 120% and its value is smaller than 120 to 130%.

Referring to FIG. 16, the uncoated region 43a of the electrode current collector includes the core-side uncoated region B1 adjacent to the core of the electrode assembly 100, the outer circumference-side uncoated region B3 adjacent to the outer circumferential surface of the electrode assembly 100, and the intermediate uncoated region B2 interposed between the core-side uncoated region B1 and the outer circumference-side uncoated region B3.

The height of the core-side uncoated region B1 is smaller than the height of the intermediate uncoated region B2. Additionally, in the intermediate uncoated region B2, the bend length of the uncoated region 43a disposed at the innermost side is equal to or smaller than the radial length R of the core-side uncoated region B1. The bend length H corresponds to the height of the uncoated region 43a with respect to the point (h in FIG. 13, h in FIG. 15) at which the uncoated region 43a is bent.

Accordingly, even when the intermediate uncoated region B2 is bent, the hollow 102 of the core of the electrode assembly 100 is not closed by the bent part. When the hollow 102 is not closed, it is possible to perform an electrolyte injection process with ease, thereby improving the electrolyte solution injection efficiency. Additionally, a welding process between the current collector plate of the negative electrode (or the positive electrode) and the battery can (or the rivet terminal) can be easily performed by inserting a welding jig through the hollow 102.

The height of the outer circumference-side uncoated region B3 is smaller than the height of the intermediate uncoated region B2. Accordingly, it is possible to prevent the contact between the beading portion and the outer circumference-side uncoated region B3 when the beading portion of the battery can is pressed near the outer circumference-side uncoated region B3.

In a variation, the height of the outer circumference-side uncoated region B3 may decrease gradually or stepwise as opposed to FIG. 16. Additionally, in FIG. 16, the height of a part of the intermediate uncoated region B2 near the outer circumference is equal, but the height of the intermediate uncoated region B2 may gradually or stepwise increase from the boundary between the core-side uncoated region B1 and the intermediate uncoated region B2 to the boundary between the intermediate uncoated region B2 and the outer circumference-side uncoated region B3.

The lower uncoated region 43b has the same structure as the upper uncoated region 43a. In a variation, the lower uncoated region 43b may have the conventional electrode current collector structure or the electrode current collector structures of the other embodiments (variations).

The end 101 of the upper uncoated region 43a and the lower uncoated region 43b may be bent from the outer circumference of the electrode assembly 100 to the core. In this instance, the core-side uncoated region B 1 and the outer circumference-side uncoated region B3 are not substantially bent.

When the intermediate uncoated region B2 includes the plurality of segments, it is possible to reduce the bending stress, thereby preventing the tear or abnormal deformation of the uncoated region 43a near the bending point. Additionally, when the width and/or height and/or pitch of the segments is adjusted according to the numerical range of the above-described embodiment, as the segments are bent toward the core, the segments overlap in sufficient multilayer to ensure the weld strength without forming an empty hole (a gap) in the bent surface (the surface viewed from the Y axis).

Referring to FIG. 17, the electrode assembly 100' is substantially the same as the electrode assembly 100 of FIG. 16 except that the height of the outer circumference-side uncoated region B3 is substantially equal to the height of the outermost side of the intermediate uncoated region B2. The outer circumference-side uncoated region B3 may include the plurality of segments.

In the electrode assembly 100', the height of the core-side uncoated region B1 is smaller than the height of the intermediate uncoated region B2. Additionally, in the intermediate uncoated region B2, the bend length H of the uncoated region disposed at the innermost side is equal to or smaller than the radial length R of the core-side uncoated region B 1.

Accordingly, even when the intermediate uncoated region B2 is bent, the hollow 102' of the core of the electrode assembly 100' is not closed by the bent part. When the hollow 102' is not closed, it is possible to perform an electrolyte injection process with ease, thereby improving the electrolyte solution injection efficiency. Additionally, a welding process between the current collector plate of the negative electrode (or the positive electrode) and the battery can (or the rivet terminal) can be easily performed by inserting a welding jig through the hollow 102'.

In a variation, the gradual or stepwise increase in height of the intermediate uncoated region B2 from the core to the outer circumference may be extended to the outer circumference-side uncoated region B3. In this case, the height of the uncoated region 43a may gradually or stepwise increase from the boundary between the core-side uncoated region B1 and the intermediate uncoated region B2 to the outermost surface of the electrode assembly 100'.

The lower uncoated region 43b has the same structure as the upper uncoated region 43a. In a variation, the lower uncoated region 43b may have the conventional electrode current collector structure or the electrode current collector structures of the other embodiments (variations).

The end 101' of the upper uncoated region 43a and the lower uncoated region 43b may be bent from the outer circumference of the electrode assembly 100' to the core. In this instance, the core-side uncoated region B1 is not substantially bent.

When the intermediate uncoated region B2 and the outer circumference-side uncoated region B3 include the plurality of segments, it is possible to reduce the bending stress, thereby preventing the tear or abnormal deformation of the uncoated regions 43a, 43b near the bending point. Additionally, when the width and/or height and/or pitch of the segments is adjusted according to the numerical range of the above-described embodiment, as the segments are bent toward the core, the segments overlap in sufficient multilayer to ensure the weld strength, without forming an empty hole (a gap) on the bent surface (the surface viewed from the Y axis).

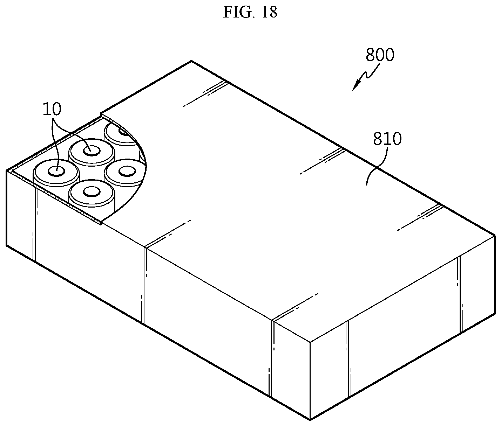

FIG. 18 is a diagram schematically showing the configuration of a battery pack according to an embodiment of the present disclosure.

Referring to FIG. 18, the battery pack 800 according to an embodiment of the present disclosure includes an assembly of the cylindrical battery cells 10 electrically connected to each other and a pack housing 810 accommodating the assembly. The cylindrical battery cell 10 is the battery cell according to the above-described embodiment. In the drawings, for convenience of illustration, some components, for example, busbars for electrical connection of the cylindrical battery cells 10, a cooling unit, an external terminal, or the like are omitted.

The battery pack 800 may be mounted in the vehicle 900. The vehicle 900 may be, for example, an electric vehicle, a hybrid electric vehicle or a plug-in hybrid electric vehicle. The vehicle 900 includes a four-wheeler or a two-wheeler.

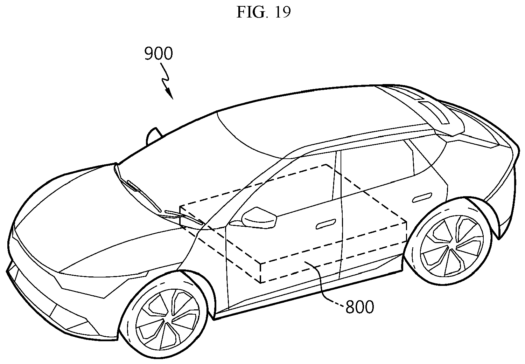

FIG. 19 is a diagram illustrating the vehicle comprising the battery pack of FIG. 18.

Referring to FIG. 19, the vehicle 900 according to an embodiment of the present disclosure includes the battery pack 800 according to an embodiment of the present disclosure. The vehicle 900 operates using the power supplied from the battery pack 800 according to an embodiment of the present disclosure.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the scope of the appended claims and equivalents thereof.

**[Description of Reference Numerals]**

| | | | |
|---|---|---|---|
| 10: | Cylindrical battery cell | 100: | Electrode assembly |
| 110: | First uncoated region | 120: | Second uncoated region |
| 200: | Battery can | 210: | Closed portion |
| 211: | Through-hole | 220: | Open portion |
| 230: | Cap plate | 231: | Vent notch |
| 240: | Beading portion | 250: | Crimping portion |
| 260: | Sealing gasket | 300: | Current collector plate |
| 310: | Weld region | 400: | Cell terminal |
| 410: | Terminal insertion portion | 500: | Insulation member |
| 510: | Insulation tape | 511: | First portion |
| 512: | Second portion | 515: | Cutout portion |
| 600: | Insulation plate | 700: | Lower current collector plate |
| 800: | battery pack | 810: | Pack housing |
| 900: | Vehicle | | |

## Claims

1. A jellyroll type electrode assembly having a structure in which a first electrode current collector and a second electrode current collector, each having a sheet shape, are wound in a direction with a separator interposed between,
wherein the first electrode current collector includes a first uncoated region in which an active material layer is not coated at an end of a long side,
wherein the first uncoated region forms a plurality of winding turns with respect to a center of the electrode assembly, is exposed through the separator, and is used as an electrode tab per se, and
wherein the electrode assembly comprises an insulation member which covers an exposed curved surface of the first uncoated region disposed at an outermost winding turn exposed through an outer circumferential surface of the electrode assembly among the plurality of winding turns.

2. The electrode assembly according to claim 1, wherein the insulation member is an insulation tape having an adhesive layer on a surface which faces the exposed curved surface of the first uncoated region.

3. The electrode assembly according to claim 2, wherein the insulation tape is a double-sided tape.

4. The electrode assembly according to claim 1, wherein the insulation member is a heat shrink tube which shrinks when exposed to heat.

5. The electrode assembly according to claim 1, wherein the insulation member is wider than a width of the exposed curved surface of the first uncoated region to cover the exposed curved surface.

6. The electrode assembly according to claim 2, wherein the insulation tape is 10 ,urn or more and 50 ,urn or less in thickness.

7. The electrode assembly according to claim 2, wherein the insulation tape is wrapped around the electrode assembly in at least one layer.

8. The electrode assembly according to claim 2, wherein the insulation tape is made of a material having an ability to prevent thermal deformation when heat is generated from the electrode assembly.

9. The electrode assembly according to claim 8, wherein the insulation tape is made of polyimide (PI), polyethylene terephthalate (PET) or polypropylene (PP).

10. The electrode assembly according to claim 9, wherein a portion of the insulation tape which covers the exposed curved surface of the first uncoated region is made of polyimide.

11. The electrode assembly according to claim 9, wherein a portion of the insulation tape which covers the exposed curved surface of the first uncoated region is made of polyimide, and a portion of the insulation tape which covers an exposed curved surface of the separator adjacent to the exposed curved surface is made of polyethylene terephthalate.

12. The electrode assembly according to claim 2, wherein at least part of the first uncoated region is divided into a plurality of segments along a winding direction of the electrode assembly.

13. The electrode assembly according to claim 12, wherein the plurality of segments is bent along a radial direction of the electrode assembly.

14. The electrode assembly according to claim 12, wherein the plurality of segments overlap in multilayer along a radial direction of the electrode assembly.

15. The electrode assembly according to claim 13, wherein the insulation tape is attached at least part of the outer circumferential surface of the electrode assembly and at least part of an upper surface of the electrode assembly together.

16. The electrode assembly according to claim 15, wherein the insulation tape includes:
a first portion which is attached to the outer circumferential surface of the electrode assembly; and
a second portion extended from the first portion, bent from the first portion and attached to the upper surface of the electrode assembly.

17. The electrode assembly according to claim 16, wherein the first portion covers an outermost exposed curved surface of the plurality of bent segments of the first uncoated region and at least part of the separator adjacent to the outermost exposed curved surface.

18. The electrode assembly according to claim 17, wherein a part of the first portion which covers the outermost exposed curved surface area of the plurality of segments of the first uncoated region is equal to or smaller in size than a part of the first portion which covers the separator adjacent to the exposed curved surface area.

19. The electrode assembly according to claim 16, wherein the second portion covers the upper surface area of the plurality of bent segments of the first uncoated region.

20. The electrode assembly according to claim 16, wherein the first portion is larger than the second portion.

21. The electrode assembly according to claim 16, wherein the second portion has at least one cutout portion.

22. The electrode assembly according to claim 21, wherein a lower end of the cutout portion is disposed at a higher position than a bent surface of the first uncoated region.

23. A cylindrical battery cell, comprising:
a jellyroll type electrode assembly having a structure in which a first electrode current collector and a second electrode current collector, each having a sheet shape, are wound in a direction with a separator interposed between, wherein the first electrode current collector includes a first uncoated region in which an active material layer is not coated at an end of a long side, the first uncoated region forms a plurality of winding turns with respect to a center of the electrode assembly, is exposed through the separator, and is used as an electrode tab per se;
a cylindrical battery can accommodating the electrode assembly and electrically connected to the second electrode current collector;
a current collector plate electrically connected to the first electrode current collector;
a cell terminal connected to the current collector plate; and
an insulation member which covers an exposed curved surface of the first uncoated region disposed at an outermost winding turn exposed through an outer circumferential surface of the electrode assembly among the plurality of winding turns.

24. The cylindrical battery cell according to claim 23, wherein a diameter of the battery can is larger than a diameter of the electrode assembly and a gap of a preset size is formed between the battery can and the electrode assembly, and
wherein the insulation member is positioned in the gap.

25. The cylindrical battery cell according to claim 23, wherein the insulation member is an insulation tape having an adhesive layer on a surface which faces the exposed curved surface of the first uncoated region.

26. The cylindrical battery cell according to claim 25, wherein at least part of the first uncoated region is divided into a plurality of segments along a winding direction of the electrode assembly.

27. The cylindrical battery cell according to claim 26, wherein the plurality of segments is bent along a radial direction of the electrode assembly.

28. The cylindrical battery cell according to claim 26, wherein the plurality of segments overlaps in multilayer along a radial direction of the electrode assembly.

29. The cylindrical battery cell according to claim 27, wherein the insulation tape includes:
a first portion which is attached to the outer circumferential surface of the electrode assembly; and
a second portion extended from the first portion, bent from the first portion and attached to an upper surface of the current collector plate coupled to the electrode assembly.

30. The cylindrical battery cell according to claim 29, wherein the first portion covers an outermost exposed curved surface area of the plurality of bent segments of the first uncoated region and at least part of the separator adjacent to the outermost exposed curved surface area.

31. The cylindrical battery cell according to claim 30, wherein the second portion covers the current collector plate coupled to the upper surface area of the plurality of bent segments of the first uncoated region.

32. The cylindrical battery cell according to claim 31, wherein the insulation tape is bent from an end of the exposed curved surface of the first uncoated region and is coupled to an upper side of the current collector plate.

33. The cylindrical battery cell according to claim 32, wherein the current collector plate has a weld region welded with the first uncoated region, and
the second portion is coupled to the upper side of the current collector plate in contact with or spaced apart from an outer edge of the weld region to avoid interference with the weld region.

34. The cylindrical battery cell according to claim 27, wherein the insulation tape includes:
a first portion which is attached to the outer circumferential surface of the electrode assembly; and
a second portion extended from the first portion, bent from an end of the first portion and attached to a bent surface of the plurality of segments of the first uncoated region.

35. The cylindrical battery cell according to claim 34, wherein the current collector plate is coupled to an upper side of the second portion of the insulation tape.

36. The cylindrical battery cell according to claim 23, wherein the battery can has a closed portion and an open portion opposite each other, and
wherein the cylindrical battery cell further comprises a cap plate configured to close the open portion of the battery can.

37. The cylindrical battery cell according to claim 36, wherein the cap plate is electrically separated from the electrode assembly and is nonpolar.

38. The cylindrical battery cell according to claim 36, wherein the closed portion has a through-hole, and
wherein the cell terminal is coupled to the through-hole.

39. The cylindrical battery cell according to claim 38, further comprising:
an insulation plate between the closed portion and the current collector plate.

40. The cylindrical battery cell according to claim 39, wherein the insulation plate includes an insulating polymer material.

41. The cylindrical battery cell according to claim 39, wherein the insulation plate is made of an elastic material.

42. The cylindrical battery cell according to claim 39, wherein the insulation plate has a center hole having a preset diameter at a center.

43. The cylindrical battery cell according to claim 42, wherein the cell terminal includes a terminal insertion portion, and
wherein the terminal insertion portion is inserted into the battery can through the through-hole.

44. The cylindrical battery cell according to claim 43, wherein the cell terminal is secured to the through-hole by riveting a lower edge of the terminal insertion portion toward an upper inner surface of the battery can.

45. The cylindrical battery cell according to claim 43, wherein a diameter of the center hole of the insulation plate is equal to or larger than a diameter of the terminal insertion portion.

46. The cylindrical battery cell according to claim 43, wherein the terminal insertion portion of the cell terminal passes through the center hole of the insulation plate.

47. The cylindrical battery cell according to claim 43, wherein the terminal insertion portion of the cell terminal is electrically coupled to the current collector plate through the center hole of the insulation plate.

48. The cylindrical battery cell according to claim 36, wherein the cylindrical battery cell comprises a sealing gasket between an edge of the cap plate and the open portion of the battery can,
wherein the battery can includes a beading portion by inward beading of the battery can in an area adjacent to the open portion, and
wherein the battery can includes a crimping portion extended and bent to the inner side of the battery can to secure the cap plate together with the sealing gasket around the edge of the cap plate.

49. The cylindrical battery cell according to claim 48, wherein the crimping portion is formed at a lower part of the battery can on a basis of placement of the battery can.

50. The cylindrical battery cell according to claim 36, wherein the cap plate includes a vent notch configured to rupture when an internal pressure of the battery can is higher than a threshold.

51. The cylindrical battery cell according to claim 50, wherein the vent notch is formed on two surfaces of the cap plate, and is formed in at least one of a continuous circular pattern, a discontinuous circular pattern or a linear pattern on the surface of the cap plate.

52. The cylindrical battery cell according to claim 50, wherein the vent notch is formed on a bottom of the battery can on a basis of placement of the battery can, and when the vent notch ruptures, gas in the battery can is forced out through the bottom of the battery can.

53. The cylindrical battery cell according to claim 48, further comprising:
a lower current collector plate coupled to a bottom of the electrode assembly.

54. The cylindrical battery cell according to claim 53, wherein at least part of edge of the lower current collector plate is electrically coupled to the beading portion, and at least part of the remaining area except the edge is electrically connected to the second uncoated region of the second electrode current collector.

55. The cylindrical battery cell according to claim 54, wherein at least part of the edge of the lower current collector plate is electrically coupled to a surface adjacent to the crimping portion among an upper surface and a lower surface of the beading portion.

56. The cylindrical battery cell according to claim 55, wherein the lower current collector plate and the beading portion are welded by a laser.

57. The cylindrical battery cell according to claim 23, wherein the insulation member has a thickness corresponding to a distance between the current collector plate and an upper inner surface of the battery can.

58. The cylindrical battery cell according to claim 23, wherein the insulation member is 100 to 500 *µ*m in thickness.

59. A battery pack comprising at least one cylindrical battery cell according to any one of claims 23 to 58.

60. A vehicle comprising at least one battery pack according to claim 59.
